(19) Europäisches Patentamt
European Patent Office
Office européen des brevets

(11) **EP 4 576 694 A1**

(12) **EUROPEAN PATENT APPLICATION**
published in accordance with Art. 153(4) EPC

(43) Date of publication:
**25.06.2025 Bulletin 2025/26**

(21) Application number: **22957761.4**

(22) Date of filing: **08.09.2022**

(51) International Patent Classification (IPC):
*H04L 27/26* (2006.01)

(52) Cooperative Patent Classification (CPC):
**H04L 27/26**

(86) International application number:
**PCT/CN2022/117947**

(87) International publication number:
**WO 2024/050789 (14.03.2024 Gazette 2024/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **HU, Yuanzhou**
**Shenzhen, Guangdong 518129 (CN)**
• **WANG, Lei**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND RELATED APPARATUS**

(57) This application provides a communication method and a related apparatus, to mitigate interference between codewords of different lengths and reduce complexity of a receiver. The method includes: A terminal device spreads to-be-transmitted data based on a target codeword to obtain spread data, where the target codeword is determined from K codebooks, each of the K codebooks includes at least one codeword, a codeword length is the same within each codebook, codeword lengths of any two of the K codebooks are different, a codeword length of any one of remaining (K-1) codebooks other than a first codebook among the K codebooks is a positive integer multiple of a codeword length of the first codebook, the first codebook is a codebook whose codeword length is the shortest among the K codebooks, and K is an integer greater than 1; and the terminal device sends the spread data to a network device, and the network device despreads the spread data based on the target codeword.

300

FIG. 3

**Description**

**TECHNICAL FIELD**

This application relates to the field of communication technologies, and in particular, to a communication method and a related apparatus.

**BACKGROUND**

In a communication system, different terminals may spread to-be-transmitted data by using different spreading sequences, and then send spread data to a network device. The spreading sequences may be orthogonal or non-orthogonal. When a plurality of terminal devices perform transmission by using a non-orthogonal multiple access (non-orthogonal multiple access, NOMA) technology, the terminal devices may spread data by using different spreading sequences according to service requirements of the terminal devices, to flexibly adapt to respective services. However, this transmission mode introduces interference, that is, different combinations of spreading sequences result in different interference patterns. The network device needs to use different interference cancellation algorithms for different interference patterns, to cancel interference between the terminal devices.

Currently, when the terminal devices perform transmission by using the NOMA technology, the network device may configure a plurality of sets of grant-free (grant-free, GF) resources. Each set of GF resources includes a plurality of demodulation reference signal (demodulation reference signal, DMRS) sequences and a plurality of spreading sequences, and the plurality of DMRS sequences are in a one-to-one correspondence with the plurality of spreading sequences (codewords). Any two sets of resources among the plurality of sets of resources are different, and lengths of codewords corresponding to the plurality of sets of resources may be different. The terminal device may select, from the plurality of sets of GF resources configured by the network device, one set of GF resources for data transmission.

Despite this, there is no specific design constraint on the codewords corresponding to the plurality of sets of GF resources, causing uncertainty in interference between codewords of different lengths. Therefore, the network device needs a plurality of sets of receiver algorithms to cancel interference between the plurality of terminal devices. This greatly increases complexity of a receiver.

**SUMMARY**

This application provides a communication method and a related apparatus, to mitigate interference between codewords of different lengths and reduce complexity of a receiver.

According to a first aspect, a method is provided. The method may be applied to a terminal device. For example, the method may be performed by the terminal device, or may be performed by a component (such as a chip or a chip system) configured in the terminal device, or may be implemented by a logical module or software that can implement a part or all of functions of the terminal device. This is not limited in this application.

For example, the method includes: spreading to-be-transmitted data based on a target codeword to obtain spread data, where the target codeword is determined from K codebooks, each of the K codebooks includes at least one codeword, a codeword length is the same within each codebook, codeword lengths of any two of the K codebooks are different, a codeword length of any one of remaining (K-1) codebooks other than a first codebook among the K codebooks is a positive integer multiple of a codeword length of the first codebook, and the first codebook is a codebook whose codeword length is the shortest among the K codebooks, where K is an integer greater than 1; and sending the spread data.

Based on this solution, when codeword lengths of the remaining (K-1) codebooks among the K codebooks are positive integer multiples of the shortest codeword length, any codeword in the remaining (K-1) codebooks may be divided into a positive integer quantity of consecutively arranged sequences. A length of each of the consecutively arranged sequences is the same as the shortest codeword length of the K codebooks. This avoids division into a fractional quantity of sequences. Therefore, during design of codewords of the remaining (K-1) codebooks, one sequence among the positive integer quantity of consecutively arranged sequences may be obtained based on one codeword in the codebook whose codeword length is the shortest. As a result, when the terminal device performs transmission by using a NOMA technology, interference can be mitigated, and complexity of a receiver can be reduced.

The first codebook is the codebook whose codeword length is the shortest among the K codebooks. In other words, the codeword length of the first codebook is the shortest codeword length of the K codebooks.

According to a second aspect, a channel state information transmission method is provided. The method may be applied to a network device. For example, the method may be performed by the network device, or may be performed by a component (such as a chip or a chip system) configured in the network device, or may be implemented by a logical module or software that can implement a part or all of functions of the network device. This is not limited in this application.

For example, the method includes: receiving spread data, where the spread data is data obtained by a terminal device spreading to-be-transmitted data based on a target codeword, the target codeword is determined from K codebooks, each of the K codebooks includes at least one codeword, a codeword length is the same within each codebook, codeword lengths of any two of the K codebooks are different, a codeword length of any one of remaining (K-1) codebooks other than a first codebook among the K codebooks is a positive integer multiple of a codeword length of the first codebook, and the first codebook is a codebook whose codeword length is the shortest among the K codebooks, where K is an integer greater than 1; and despreading the spread data based on the target codeword.

Based on this solution, when codeword lengths of the remaining (K-1) codebooks among the K codebooks are positive integer multiples of the shortest codeword length, any codeword in the remaining (K-1) codebooks may be divided into a positive integer quantity of consecutively arranged sequences. A length of each of the consecutively arranged sequences is the same as the shortest codeword length of the K codebooks. This avoids division into a fractional quantity of sequences. Therefore, during design of codewords of the remaining (K-1) codebooks, one sequence among the positive integer quantity of consecutively arranged sequences may be obtained based on one codeword in the codebook whose codeword length is the shortest. As a result, interference can be mitigated, and complexity of a receiver can be reduced.

With reference to the first aspect and the second aspect, in some implementations of the first aspect and the second aspect, the any codeword in the remaining (K-1) codebooks includes a plurality of sequences, and the plurality of sequences are obtained based on a codeword in the first codebook.

With reference to the first aspect and the second aspect, in some implementations of the first aspect and the second aspect, the plurality of sequences are the codeword in the first codebook.

In this application, one sequence among the positive integer quantity of consecutively arranged sequences is obtained based on one codeword in the codebook whose codeword length is the shortest. As a result, the interference can be mitigated, and the complexity of the receiver can be reduced.

With reference to the first aspect and the second aspect, in some implementations of the first aspect and the second aspect, all the plurality of sequences are the same.

Based on this, a design of a plurality of same sequences can reduce a quantity of interference patterns and reduce the complexity of the receiver.

With reference to the first aspect and the second aspect, in some implementations of the first aspect and the second aspect, the plurality of sequences include at least two different sequences.

With reference to the first aspect and the second aspect, in some implementations of the first aspect and the second aspect, each of the K codebooks includes N codewords, a codeword obtained by sequentially concatenating $\frac{\beta L_k}{L_{k-1}}$ codewords obtained by performing codeword hopping $(\frac{\beta L_k}{L_{k-1}} - 1)$ times from an $i^{th}$ codeword in a $(k-1)^{th}$ codebook among the K codebooks is the same as a codeword obtained by sequentially concatenating $\beta$ codewords obtained by performing codeword hopping ($\beta$ - 1) times from an $i^{th}$ codeword in a $k^{th}$ codebook among the K codebooks, and the $i^{th}$ codeword is any codeword in the codebook that the $i^{th}$ codeword is in, where $\beta$ is a positive integer, $L_k$ represents a codeword length of the $k^{th}$ codebook, $L_{k-1}$ represents a codeword length of the $(k$ - $1)^{th}$ codebook, $L_{k-1}<L_k$, $L_k/L_{k-1}$ is a positive integer, $1{\leq}k{\leq}K-1$, $0{\leq}i<N$, k and N are positive integers, and i is an integer.

When terminal devices employ codebook hopping, the foregoing design can reduce the quantity of interference patterns and reduce computational complexity of the receiver during NOMA transmission performed by plurality of terminals.

With reference to the first aspect and the second aspect, in some implementations of the first aspect and the second aspect, each codeword in the K codebooks corresponds to one reference signal sequence, and different codewords in the K codebooks correspond to different reference signal sequences.

With reference to the first aspect and the second aspect, in some implementations of the first aspect and the second aspect, there is at least one codeword, in the remaining (K-1) codebooks, whose corresponding reference signal sequence is the same as a reference signal sequence corresponding to a first codeword, and the first codeword is a codeword in the first codebook.

According to the foregoing design scheme in which one reference signal sequence corresponds to a plurality of codewords, overheads of the reference signal sequence can be reduced.

With reference to the first aspect and the second aspect, in some implementations of the first aspect and the second aspect, before the spreading to-be-transmitted data based on a target codeword to obtain spread data, the method further includes: determining a target reference signal sequence; and determining the target codeword based on the target reference signal sequence.

With reference to the first aspect and the second aspect, in some implementations of the first aspect and the second aspect, the remaining (K-1) codebooks are obtained by spreading the first codebook by using different orthogonal spreading sequences.

Based on this, interference positions are the same when the terminal device performs NOMA transmission by using a plurality of combinations. As a result, the computational complexity of the receiver can be reduced.

With reference to the first aspect and the second aspect, in some implementations of the first aspect and the second aspect, the method further includes: receiving indication information, where the indication information indicates a manner of obtaining the plurality of sequences based on the codeword in the first codebook.

According to a third aspect, a communication apparatus is provided, configured to perform the method according to any possible implementation of any one of the foregoing aspects. Specifically, the apparatus includes a module configured to perform the method according to any possible implementation of any one of the foregoing aspects.

In a design, the communication apparatus may include modules that are in a one-to-one correspondence with the methods/operations/steps/actions described in any one of the foregoing aspects, and the modules may be implemented by a hardware circuit, software, or a combination of a hardware circuit and software.

In another design, the communication apparatus is a communication chip, and the communication chip may include an input circuit or interface configured to send information or data, and an output circuit or interface configured to receive information or data.

In another design, the communication apparatus is a terminal device, and the terminal device may include a transmitter configured to send information or data, and a receiver configured to receive information or data.

In another design, the communication apparatus is a network device, and the network device may include a transmitter configured to send information or data, and a receiver configured to receive information or data.

In another design, the communication apparatus is configured to perform the method according to any possible implementation of any one of the foregoing aspects, and the communication apparatus may be configured in a terminal device or a network device, or the communication apparatus is a terminal device or a network device.

According to a fourth aspect, another communication apparatus is provided, including a processor and a memory, where the memory is configured to store a computer program, and the processor is configured to invoke the computer program from the memory and run the computer program, to enable the communication apparatus to perform the method according to any possible implementation of any one of the foregoing aspects.

Optionally, there are one or more processors, and there are one or more memories.

Optionally, the memory may be integrated with the processor, or the memory and the processor may be separately disposed.

Optionally, the communication device further includes a transmitter (transmitter) and a receiver (receiver). The transmitter and the receiver may be separately disposed, or may be integrated together and referred to as a transceiver (transceiver).

According to a fifth aspect, a communication system is provided, including a communication apparatus configured to implement the method according to the first aspect or any one of the possible implementations of the first aspect, or including a communication apparatus configured to implement the method according to the second aspect or any one of the possible implementations of the second aspect.

In a possible design, the communication system may further include another device that interacts with the terminal device and/or the network device in the solutions provided in embodiments of this application.

According to a seventh aspect, a computer program product is provided, where the computer program product includes a computer program (which may also be referred to as code or instructions), and when the computer program is run, a computer is enabled to perform the method according to any possible implementation of any one of the foregoing aspects.

According to an eighth aspect, a computer-readable storage medium is provided, where the computer-readable storage medium stores a computer program (which may also be referred to as code or instructions), and when the computer program is run on a computer, the computer is enabled to perform the method according to any possible implementation of any one of the foregoing aspects.

## BRIEF DESCRIPTION OF DRAWINGS

FIG. 1 is a diagram of a communication system according to an embodiment of this application;
FIG. 2 is a diagram of GF resources;
FIG. 3 is a schematic flowchart of a communication method according to an embodiment of this application;
FIG. 4 is a diagram of codebooks according to an embodiment of this application;
FIG. 5 is another diagram of codebooks according to an embodiment of this application;
FIG. 6 is a diagram of codeword hopping according to an embodiment of this application;
FIG. 7 is still another diagram of codebooks according to an embodiment of this application;
FIG. 8 is yet another diagram of codebooks according to an embodiment of this application;
FIG. 9 is a diagram of a correspondence between codewords and reference signal sequences according to an embodiment of this application;

FIG. 10 is a diagram of another correspondence between codewords and reference signal sequences according to an embodiment of this application;

FIG. 11 is a diagram of a codebook set according to an embodiment of this application;

FIG. 12 is a schematic flowchart of another communication method according to an embodiment of this application;

FIG. 13 is still yet another diagram of codebooks according to an embodiment of this application;

FIG. 14 is a block diagram of a communication apparatus according to an embodiment of this application; and

FIG. 15 is a block diagram of another communication apparatus according to an embodiment of this application.

## DESCRIPTION OF EMBODIMENTS

The following describes technical solutions of this application with reference to the accompanying drawings.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G mobile communication system, a new radio (new radio, NR) system or another evolved communication system, a next generation mobile communication system beyond a 5G communication system, a 6th generation (6th generation, 6G) communication system, or a future communication system.

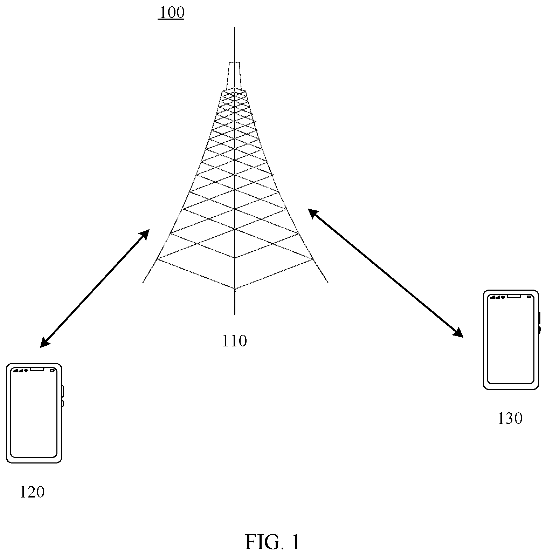

For ease of understanding of embodiments of this application, a communication system to which embodiments of this application are applicable is first described in detail with reference to FIG. 1.

FIG. 1 is a diagram of a communication system 100 according to an embodiment of this application. As shown in FIG. 1, the communication system 100 may include a network device 110, a terminal device 120, and a terminal device 130. Data communication may be performed between the network device 110 and the terminal device 120 and between the network device 110 and the terminal device 130 through wireless connections. Specifically, the network device 110 may send downlink data to the terminal device 120 and the terminal device 130, and the terminal device 120 and the terminal device 130 may send uplink data to the network device 110.

For example, the network device 110 may send data to the terminal device 120 and the terminal device 130 at the same time by using a NOMA technology, and the terminal device 120 and the terminal device 130 may send data to the network device 110 at the same time by using the NOMA technology.

The network device in the communication system is configured to: determine a data transmission resource and a data transmission mode, and notify the terminal device of a resource scheme and the data transmission mode that are determined. The terminal device is configured to perform data transmission based on an indication of the network device by using the resource allocation scheme and the data transmission mode that are determined by the network device. The data transmission includes data receiving and data sending.

The network device in embodiments of this application may be an access network device or a radio access network device. The network device may be a transmission reception point (transmission reception point, TRP), an evolved NodeB (evolved NodeB, eNB or eNodeB) in an LTE system, a home base station (for example, a home evolved NodeB or a home NodeB, HNB), a baseband unit (baseband unit, BBU), or a radio controller in a cloud radio access network (cloud radio access network, CRAN) scenario. Alternatively, the network device may be a satellite, an uncrewed aerial vehicle, a relay station, an access point, a vehicle-mounted device, a wearable device, a network device in a 5G network, a network device in a future evolved PLMN network, or the like, or may be an access point (access point, AP) in a WLAN, or may be a gNB in an NR system. Alternatively, the scheduling node may be a metro base station, a micro base station, a pico base station, a femto base station, or the like, or may be a terminal device with a scheduling function. This is not limited in this application.

In a network structure, the network device may include a central unit (central unit, CU) node, a distributed unit (distributed unit, DU) node, a radio access network (radio access network, RAN) device including a CU node and a DU node, or a RAN device including a CU control plane node (CU-CP node), a CU user plane node (CU-UP node), and a DU node.

The network device provides a service for a cell, and the terminal device communicates with the cell using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell may include a metro cell (metro cell), a micro cell (micro cell), a pico cell (pico cell), a femto cell (femto cell), and the like. These small cells feature small coverage and low transmit power, and are applicable to providing a high-rate data transmission service.

The terminal device in embodiments of this application is also referred to as user equipment (User Equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device with a wireless connection function. Currently, examples of some terminal devices include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, an uncrewed aerial vehicle, a personal digital assistant (PDA), a handheld device with a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. This is not limited in this application.

As an example instead of a limitation, in this application, the terminal device may be a terminal device in an internet of things (internet of things, IoT) system. The internet of things is an important part in future development of information technologies. A main technical feature of the internet of things is to connect things to a network by using a communication technology, to implement an intelligent network for human-machine interconnection and thing-thing interconnection. For example, the terminal device in embodiments of this application may be a wearable device. The wearable device may also be referred to as a wearable intelligent device, and is a general term for wearable devices, such as glasses, gloves, watches, clothes, and shoes, that are developed by applying wearable technologies to intelligent designs of daily wear. The wearable device is a portable device that can be directly worn on a body or integrated into clothes or accessories of a user. The wearable device is not merely a hardware device, but can implement a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to be used together with other devices such as smartphones, for example, various smart bands or smart jewelry for monitoring physical signs.

As an example instead of a limitation, in embodiments of this application, the terminal device may alternatively be a terminal device in machine type communication (machine type communication, MTC). In addition, the terminal device may alternatively be a vehicle-mounted module, a vehicle-mounted assembly, a vehicle-mounted component, a vehicle-mounted chip, a vehicle-mounted unit, or the like that is built in a vehicle as one or more components or units. The vehicle may implement the method provided in this application using the built-in vehicle-mounted module, vehicle-mounted assembly, vehicle-mounted component, vehicle-mounted chip, vehicle-mounted unit, or the like. Therefore, embodiments of this application may also be applied to the internet of vehicles, for example, vehicle to everything (vehicle to everything, V2X), long term evolution-vehicle (long term evolution-vehicle, LTE-V), or a vehicle-to-vehicle (vehicle-to-vehicle, V2V) technology.

It should be understood that FIG. 1 is merely a simplified diagram for ease of understanding. The communication system 100 may further include another device, which is not shown in FIG. 1.

For ease of understanding, the following briefly describes terms in embodiments of this application.

1. Codebook (codebook) and codeword (codeword): One codebook may include one or more codewords, and a terminal device may spread (spread) data by using a codeword.

2. Signature (signature) sequence group and signature sequence: One signature sequence group may include one or more signature sequences, and the terminal device may spread data by using a signature sequence.

It may be understood that the codebook and the signature sequence group may be the same, and the codeword and the signature sequence may be the same. The codeword and the signature sequence may also be referred to as a spreading sequence.

3. Codeword hopping: When spreading a plurality of modulation symbols, the terminal device may spread different modulation symbols by using different codewords. This is analogous to a case in which, from one modulation symbol to another modulation symbol, a used codeword hops. Therefore, a manner in which the terminal device spreads the plurality of modulation symbols by using different codewords is referred to as codeword hopping. Codeword hopping may also be referred to as signature hopping (signature hopping).

A codeword hopping pattern (pattern) may be predefined, or may be notified by a network device to the terminal device in advance through signaling. The pattern may specifically indicate a codeword used to spread each modulation symbol.

In contrast to codeword hopping being performed, if codeword hopping is not performed when the terminal device spreads a plurality of modulation symbols, codewords used for the plurality of modulation symbols are the same.

In a communication system, each terminal device may spread data and/or a reference signal by using a spreading sequence (spreading sequence). Spreading sequences used by different terminal devices may be orthogonal or non-orthogonal. For example, when a plurality of terminal devices perform transmission by using a NOMA technology, because service requirements of the terminal devices are different (for example, sizes of data packets to be sent by different terminal devices are different, reliability requirements are different, or peak-to-average power ratio requirements are different), the terminal devices may spread data by using spreading sequences of different lengths, to flexibly adapt to respective services.

The size of the data packet to be sent by the terminal device may be a transport block size (transport block size, TBS) of data to be sent by the terminal device.

However, interference information is introduced when the terminal devices perform NOMA transmission. In this case, a receive end (for example, the network device) needs to perform channel estimation by using a reference signal, to obtain channels of the terminal devices, and needs to cancel interference between the terminal devices by using a successive interference cancellation (successive interference cancellation, SIC) technology, to improve demodulation performance.

In an existing NOMA solution, the network device may configure a plurality of sets of GF resources for the terminal devices. Each set of resources includes a plurality of DMRS sequences and a plurality of codewords, and the plurality of DMRS sequences are in a one-to-one correspondence with the plurality of codewords. The plurality of DMRS sequences may be different from each other within each set of resources, and the plurality of codewords may also be different from each other within each set of resources. Codeword lengths corresponding to different sets of GF resources may be different.

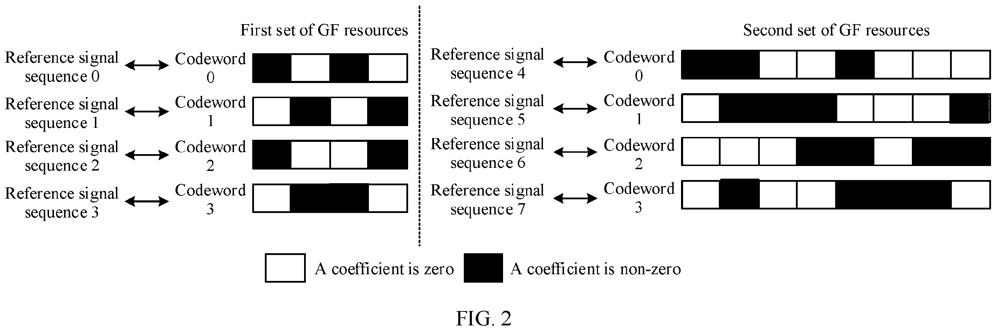

For example, FIG. 2 is a diagram of GF resources. As shown in FIG. 2, the network device configures two sets of GF resources for the terminal devices. A first set of GF resources includes four reference signal sequences and four codewords. Lengths of the four codewords each are 4. The four codewords are different from each other, the four reference signal sequences are also different from each other, and the four reference signal sequences are in a one-to-one correspondence with the four codewords. For example, in the first set of GF resources, a codeword 0 corresponds to a reference signal sequence 0, a codeword 1 corresponds to a reference signal sequence 1, a codeword 2 corresponds to a reference signal sequence 2, and a codeword 3 corresponds to a reference signal sequence 3. A second set of GF resources includes four reference sequences and four codewords. Lengths of the four codewords each are 8. The four codewords are different from each other, the four reference sequences are also different from each other, and the four reference sequences are in a one-to-one correspondence with the four codewords. For example, in the second set of GF resources, a codeword 0 corresponds to a reference signal sequence 4, a codeword 1 corresponds to a reference signal sequence 5, a codeword 2 corresponds to a reference signal sequence 6, and a codeword 3 corresponds to a reference signal sequence 7. The reference sequences included in the two sets of GF resources are different from each other, and the codewords in the two sets of GF resources may be randomly configured.

The terminal device determines, based on the plurality of sets of GF resources, one or more codewords for data transmission. This method can flexibly support the terminal device to perform NOMA transmission by using codewords of different lengths. Despite this, there is no specific design constraint on codewords that are of different lengths and that correspond to the plurality of sets of GF resources, causing uncertainty in interference between the codewords of different lengths and consequently resulting in more possible interference patterns. Therefore, when receiving data from different terminal devices, the network device needs more sets of receiver algorithms to cancel interference between the plurality of terminal devices. This greatly increases complexity of a receiver.

The plurality of codewords included in one set of GF resources among the sets of GF resources may be referred to as one codebook or one signature sequence group. Generally, codeword lengths of a plurality of codewords in a same codebook are the same, a plurality of codewords in a same codebook are different from each other, and codeword lengths of different codebooks are different. For example, when the plurality of terminal devices select, from a same codebook, different codewords of a same length for NOMA transmission, combinations of the selected different codewords result in different interference patterns, and the network device may use corresponding interference cancellation algorithms based on the different interference patterns to perform interference cancellation. When the plurality of terminal devices select, from a plurality of codebooks whose lengths are different, codewords for NOMA transmission, if there is no special design for the codebooks whose lengths are different, combinations of the codewords of different lengths also result in different interference patterns. This greatly increases a quantity of possible interference patterns and therefore greatly increases the complexity of the receiver.

In view of this, embodiments of this application provide a communication method and a related apparatus. Codeword lengths of K codebooks each are set to a positive integer multiple of a shortest codeword length, so that it is feasible to generate remaining (K-1) codebooks based on a codebook whose codeword length is the shortest among the K codebooks. As a result, after the remaining (K-1) codebooks are generated based on the codebook whose codeword length is the shortest among the K codebooks, when a plurality of terminal devices perform NOMA transmission by using codewords of different lengths in the K codebooks, a possibility of interference and a quantity of interference patterns can be reduced, so that complexity of a receiver can be reduced.

Before the method provided in this application is described, the following several points are first described.

First, in this application, "indication" may include direct indication and indirect indication, or may include explicit indication and implicit indication. Information indicated by specific information is referred to as to-be-indicated information. During specific implementation, the to-be-indicated information may be indicated in many manners, for example, but not limited to: The to-be-indicated information may be directly indicated, for example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only one part of the to-be-indicated information may be indicated, where the other part of the to-be-indicated information is known or pre-agreed on. Alternatively, for example, specific information may be indicated by using an arrangement order of a plurality of pieces of information that are pre-agreed on (for example, specified in a protocol), to reduce indication overheads to some extent.

Second, in embodiments described in this specification, terms and English acronyms and abbreviations, such as codebook, codeword, and spreading, are all examples provided for ease of description, and shall not constitute any limitation on this application. This application does not exclude a possibility of defining another term that can implement a same or similar function in an existing or a future protocol.

Third, in embodiments described below, "predefinition" may be implemented by pre-storing corresponding code or a corresponding table in a device (for example, including a terminal device and a network device), or may be implemented in another manner that may be used to indicate related information. A specific implementation thereof is not limited in this application.

Fourth, in embodiments described below, the term such as "example" or "for example" represents giving an example, an illustration, or a description. Any embodiment or design scheme described as an "example" or "for example" in this application should not be explained as being more preferred or having more advantages than another embodiment or design scheme. Exactly, use of the term such as "example" or "for example" is intended to present a related concept in a specific manner.

In addition, "a plurality of" means two or more than two. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c, where a, b, and c may be single or plural.

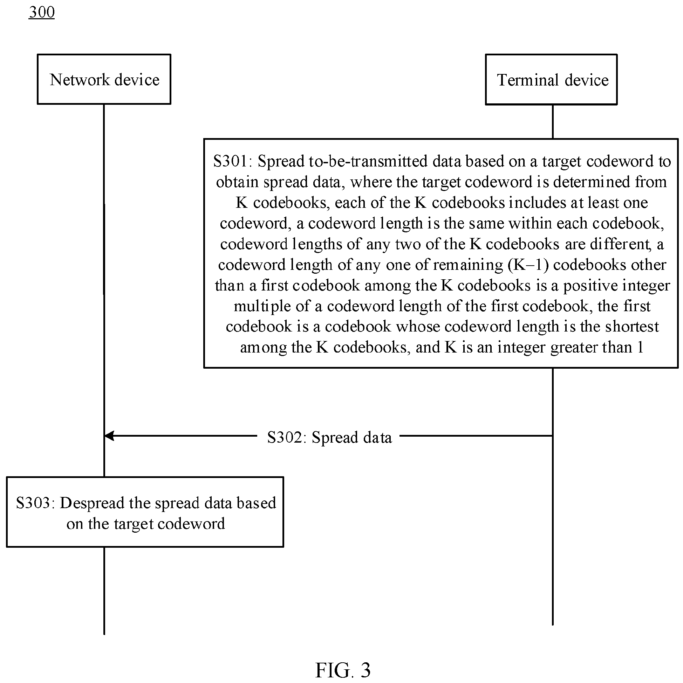

The following describes in detail the communication method provided in embodiments of this application with reference to FIG. 3 to FIG. 13. The communication method may be applied to the communication system 100 shown in FIG. 1. However, embodiments of this application is not limited thereto.

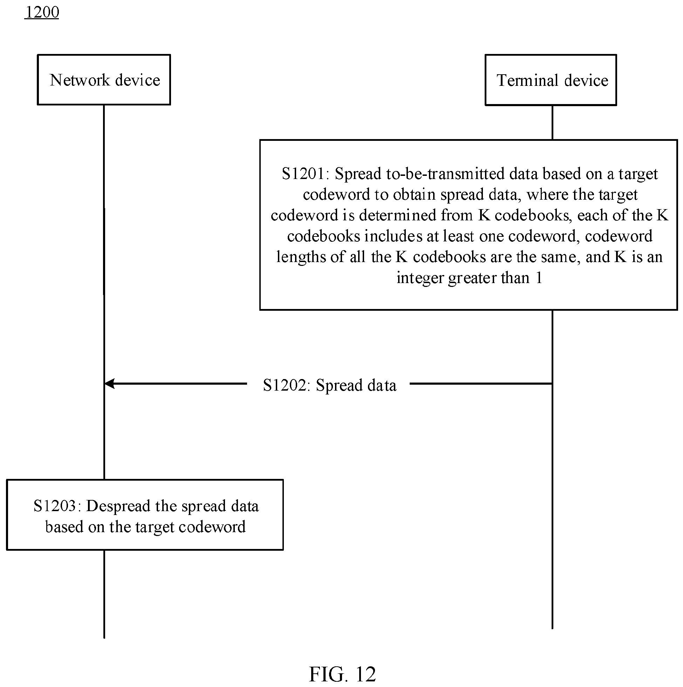

The method is shown from a perspective of interaction between a terminal device and a network device in both flowcharts shown in FIG. 3 and FIG. 12. However, entities for performing the method are not limited in this application. For example, the terminal device in FIG. 3 and FIG. 12 may alternatively be a chip, a chip system, or a processor that supports the terminal device to implement the method, or may be a logical module or software that can implement a part or all of functions of the terminal device; and the network device in FIG. 3 and FIG. 12 may alternatively be a chip, a chip system, or a processor that supports the network device to implement the method, or may be a logical module or software that can implement a part or all of functions of the network device.

FIG. 3 is a schematic flowchart of a communication method 300 according to an embodiment of this application. As shown in FIG. 3, the method 300 may include the following steps.

S301: A terminal device spreads to-be-transmitted data based on a target codeword to obtain spread data.

The target codeword is determined from K codebooks. Each of the K codebooks includes at least one codeword. A codeword length is the same within each codebook. Codeword lengths of any two of the K codebooks are different. A codeword length of any one of remaining (K-1) codebooks other than a first codebook among the K codebooks is a positive integer multiple of a codeword length of the first codebook. The first codebook is a codebook whose codeword length is the shortest among the K codebooks. K is an integer greater than 1. In other words, when each of the K codebooks includes a plurality of codewords, codeword lengths of the plurality of codewords included within each codebook are the same, and codeword lengths of different codebooks are different.

It should be understood that each codeword may include a plurality of code elements, and a quantity of code elements in each codeword may be referred to as a codeword length of the codeword. For example, one codeword includes four code elements. In this case, a codeword length of the codeword is 4. The four code elements of the codeword may be represented as 0101, and 0101 may also be referred to as coefficients of the codeword. It should be further understood that a value of each code element in the codeword may be 0, a real number, or a complex number. This is not limited in this application.

S302: The terminal device sends the spread data to a network device, and correspondingly, the network device receives the spread data.

S303: The network device despreads the spread data based on the target codeword.

In embodiments of this application, when codeword lengths of the remaining (K-1) codebooks among the K codebooks are positive integer multiples of the shortest codeword length, any codeword in the remaining (K-1) codebooks may be divided into a positive integer quantity of consecutively arranged sequences. A length of each of the consecutively arranged sequences is the same as the shortest codeword length of the K codebooks. This avoids division into a fractional quantity of sequences. Therefore, during design of codewords of the remaining (K-1) codebooks, one sequence among the positive integer quantity of consecutively arranged sequences may be obtained based on one codeword in the codebook whose codeword length is the shortest. As a result, a quantity of possible interference patterns can be reduced, and complexity of a receiver can be reduced.

It should be understood that the to-be-transmitted data may include a plurality of elements, in other words, the to-be-transmitted data may include a plurality of values. If the to-be-transmitted data is a modulation symbol, the plurality of elements of the to-be-transmitted data are a plurality of modulation symbols, and each element is one modulation symbol. Optionally, the to-be-transmitted data may alternatively be an output result obtained by performing a Fourier transform on the modulation symbols. In this case, an element of the to-be-transmitted data is a value in the output result.

It may be understood that, that the terminal device spreads the to-be-transmitted data based on the target codeword is spreading each of the plurality of elements included in the data. For example, the to-be-transmitted data includes two modulation symbols, and a length of the codeword is 4. In other words, one codeword includes four code elements, and one codeword includes four coefficient values. That the two modulation symbols are spread based on the codeword whose length is 4 may be: One of the two modulation symbols is multiplied by the codeword to obtain four spread values, the other of the two modulation symbols is multiplied by the codeword to obtain four spread values, and the four spread values corresponding to each of the two modulation symbols are sequentially concatenated to obtain the spread data.

It should be further understood that, the K codebooks may be predefined or may be configured by the network device for the terminal device, or the first codebook among the K codebooks is predefined or is configured by the network device for the terminal device and the remaining (K-1) codebooks among the K codebooks are determined by the terminal device based on the first codebook. For example, the network device may send the K codebooks or the first codebook to the terminal device through radio resource control (radio resource control, RRC) signaling or other signaling.

That a codeword length of any one of remaining (K-1) codebooks is a positive integer multiple of a codeword length of the first codebook may be implemented in the following two manners. For ease of description, the K codebooks may be first sorted in ascending order of the codeword lengths, to obtain a $0^{th}$ codebook to a $(K-1)^{th}$ codebook. A codeword length of a codebook ranked first after sorting (namely, the $0^{th}$ codebook) is the shortest codeword length of the K codebooks. Therefore, the codebook ranked first is the first codebook.

Manner 1: A codeword length $L_k$ of a $k^{th}$ codebook is $(k+1)$ times a codeword length $L_0$ of the $0^{th}$ codebook, that is:

$$L_k = L_0(k+1)$$

Manner 2: A codeword length of a codebook ranked later is a positive integer multiple of a codeword length of a codebook ranked earlier. In other words, a codeword length $L_k$ of a $k^{th}$ codebook is a positive integer multiple of a codeword length $L_{k-1}$ of a $(k-1)^{th}$ codebook. For example, the codeword length of the $k^{th}$ codebook is at least twice the codeword length of the $(k-1)^{th}$ codebook.

In Manner 1 and Manner 2, $1 \leq k < K$, and k is an integer. In other words, a value of k ranges from 1 to K-1.

As an optional embodiment, the any codeword in the remaining (K-1) codebooks includes a plurality of sequences, and the plurality of sequences are obtained based on a codeword in the first codebook.

A length of each of the plurality of sequences is the codeword length of the first codebook.

With reference to three possible implementations, the following describes in detail how the plurality of sequences are obtained based on the codeword in the first codebook.

In a possible implementation, the plurality of sequences are the codeword in the first codebook. In other words, the any codeword in the remaining (K-1) codebooks is obtained by concatenating one or more codewords in the first codebook.

The following describes in detail a relationship between the plurality of sequences with reference to two examples.

Example 1: All the plurality of sequences are the same. In other words, the any codeword in the (K-1) codebooks includes a plurality of sequences that are completely the same.

After determining the first codebook, the network device or the terminal device may determine (K-1) different values (indicating a quantity of repetitions of the first codebook), and determine the remaining (K-1) codebooks based on the (K-1) values and the first codebook. That is, the (K-1) codebooks are in a one-to-one correspondence with the (K-1) values. For example, K=3, the codeword length of the first codebook is 4, and the (K-1) different values are 2 and 3. In this case, codeword lengths of remaining two codebooks are 8 and 12, a quantity of repetitions corresponding to the codebook whose codeword length is 8 is 2, and a quantity of repetitions corresponding to the codebook whose codeword length is 12 is 3.

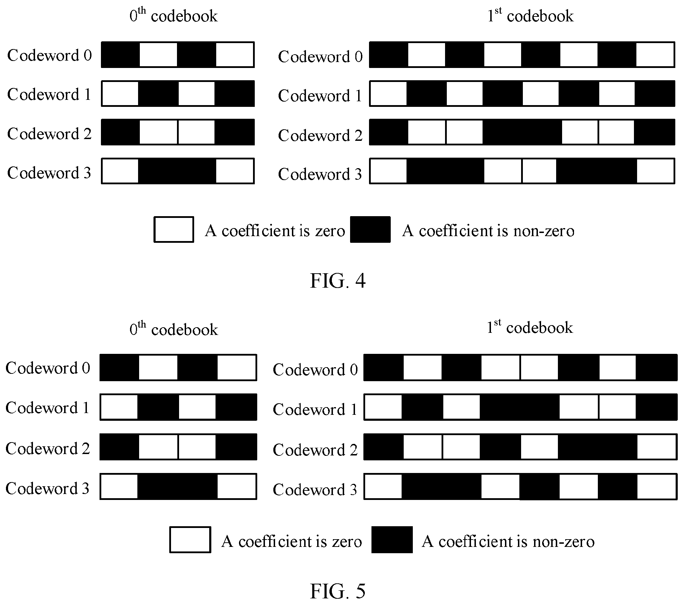

FIG. 4 is a diagram of codebooks according to an embodiment of this application. As shown in FIG. 4, K=2, there are two codebooks, and each codebook includes four codewords. A $0^{th}$ codebook is the first codebook, and a codeword length is 4. A $1^{st}$ codebook is the remaining (K-1) codebook, and a codeword length is 8.

As shown in FIG. 4, coefficients of a codeword 0 to a codeword 3 in the $0^{th}$ codebook are

$$I_0^0 = [1, 0, 1, 0], \quad I_0^1 = [0, 1, 0, 1], \quad I_0^2 = [1, 0, 0, 1]$$, and $I_0^3 = [0, 1, 1, 0]$, and coefficients of a codeword 0 to a codeword 3 in the $1^{st}$ codebook are $I_1^0 = [1, 0, 1, 0, 1, 0, 1, 0]$, $I_1^1 =$ [0,1, 0,1, 0,1, 0, 1],

$I_1^2 = [1, 0, 0, 1, 1, 0, 0, 1]$, and $I_1^3 = [0, 1, 1, 0, 0, 1, 1, 0]$. Each codeword in the $1^{st}$ codebook includes two same sequences, and the sequence is one codeword in the $0^{th}$ codebook. In other words, the $1^{st}$ codebook is obtained by repeating the codewords in the $0^{th}$ codebook twice. For example, the codeword 0 in the $1^{st}$ codebook is obtained by repeating the codeword 0 in the $0^{th}$ codebook twice, the codeword 1 in the $1^{st}$ codebook is obtained by repeating the codeword 1 in the $0^{th}$ codebook twice, the codeword 2 in the $1^{st}$ codebook is obtained by repeating the codeword 2 in the $0^{th}$ codebook twice, and the codeword 3 in the $1^{st}$ codebook is obtained by repeating a codeword 1 in a $3^{rd}$ codebook twice.

It should be understood that the values (for example, 1) of the non-zero coefficients of the codewords shown in FIG. 4 are merely an example, and do not constitute a limitation on the non-zero coefficients. In addition, the values of the non-zero coefficients of the codewords shown in FIG. 4 may be the same or different. This is not limited in this application.

It should be further understood that a quantity of zero coefficients of each codeword shown in FIG. 4 is merely an example, and does not constitute a limitation on the quantity of zero coefficients.

With reference to the example shown in FIG. 4, when terminal devices do not employ codebook hopping, one of two terminal devices selects the codeword 0 in the codebook 0 or the codeword 0 in the codebook 1, and the other of the two terminal devices selects the codeword 2 in the codebook 0 or the codeword 2 in the codebook 1, the following case exists: When the two terminal devices perform NOMA transmission by using four possible combinations of the foregoing codewords, interference positions are the same and interference coefficients are the same, that is, interference patterns are the same. Therefore, the foregoing design manner of the K codebooks can reduce the quantity of interference patterns, thereby reducing computational complexity of the receiver.

Example 2: The plurality of sequences include at least two different sequences. In other words, the any codeword in the (K-1) codebooks includes a plurality of sequences that are not completely the same.

After determining the first codebook, the network device or the terminal device may determine the remaining (K-1) codebooks based on the codeword in the first codebook. For example, a plurality of codewords in the first codebook may be combined and concatenated according to a predefined rule to obtain a plurality of codewords, and the obtained plurality of codewords are codewords in the (K-1) codebooks.

The following shows a manner of determining the remaining (K-1) codebooks based on the first codebook.

For example, each of the K codebooks includes N codewords, a codeword length of a $k^{th}$ codebook is $L_k$, and an

$i^{th}$ codeword in the $k^{th}$ codebook is represented as $I_k^i$. In this case, a quantity of sequences included in a codeword in the $k^{th}$ codebook is $L_k/L_0$. Sequence indexes (denoted as q) corresponding to $L_u/L_0$ sequences included in the codeword of the $k^{th}$ codebook are 0 to $L_k/L_0$-1. Then, the $i^{th}$ codeword of the $k^{th}$ codebook may be represented as:

$$I_k^i = [I_{k,i}^0, I_{k,i}^1, \ldots, I_{k,i}^q, \ldots, I_{k,i}^{L_k/L_0-1}]$$

$I_{k,i}^q$ represents a $q^{th}$ sequence included in the $i^{th}$ codeword in the $k^{th}$ codebook.

In a possible implementation (which may be a predefined rule):

$$I_{k,i}^q = I_0^{(i+q) \bmod N}$$

mod represents a modulo operation. It should be understood that, in the foregoing implementation, the $q^{th}$ sequence in the $i^{th}$ codeword in the $k^{th}$ codebook is an $((i + q) \bmod N)^{th}$ codeword in a $0^{th}$ codebook.

FIG. 5 is another diagram of codebooks according to an embodiment of this application. As shown in FIG. 5, K=2, there are two codebooks, and each codebook includes four codewords. A 0th codebook is the first codebook, and a codeword length is 4. A 1st codebook is the remaining (K-1) codebook, and a codeword length is 8.

As shown in FIG. 5, coefficients of a codeword 0 to a codeword 3 in the 0th codebook are

$$l_0^0 = [1, 0, 1, 0], \quad l_0^1 = [0, 1, 0, 1], \quad l_0^2 = [1, 0, 0, 1]$$ , and $$l_0^3 = [0, 1, 1, 0]$$ , and coefficients of a codeword 0 to a codeword 3 in the 1st codebook are $$l_1^0 = [1, 0, 1, 0, 0, 1, 0, 1]$$ , $$l_1^1 = [0, 1, 0, 1, 1, 0, 0, 1],$$

$$l_1^2 = [1, 0, 0, 1, 0, 1, 1, 0]$$ , and $$l_1^3 = [0, 1, 1, 0, 1, 0, 1, 0]$$ . Each codeword in the 1st codebook includes two different sequences, and the two sequences are two codewords in the 0th codebook. For example, the codeword 0 in the 1st codebook includes the codeword 0 and the codeword 1 in the 0th codebook, the codeword 1 in the 1st codebook includes the codeword 2 and the codeword 2 in the 0th codebook, the codeword 2 in the 1st codebook includes the codeword 2 and the codeword 3 in the 0th codebook, and the codeword 3 in the 1st codebook includes the codeword 3 and the codeword 0 in the 0th codebook.

It should be understood that the non-zero coefficients (for example, 1) of the codewords shown in FIG. 5 are merely an example, and do not constitute a limitation on the non-zero coefficients. In addition, the values of the non-zero coefficients of the codewords shown in FIG. 5 may be the same or different. This is not limited in this application.

It should be further understood that a quantity of zero coefficients of each codeword shown in FIG. 5 is merely an example, and does not constitute a limitation on the quantity of zero coefficients.

As an optional embodiment, each of the K codebooks includes N codewords, a codeword obtained by sequentially concatenating $\frac{\beta L_k}{L_{k-1}}$ codewords obtained by performing codeword hopping $(\frac{\beta L_k}{L_{k-1}} - 1)$ times from an ith codeword in a (k-1)th codebook among the K codebooks is the same as a codeword obtained by sequentially concatenating $\beta$ codewords obtained by performing codeword hopping ($\beta$ - 1) times from an ith codeword in a kth codebook among the K codebooks, and the ith codeword is any codeword in the codebook that the ith codeword is in.

$\beta$ is a positive integer, $L_k$ represents a codeword length of the kth codebook, $L_{k-1}$ represents a codeword length of the (k - 1)th codebook, $L_k/L_{k-1}$ is a positive integer, $1 \leq k \leq K-1$, $0 \leq i < N$, $N > 1$, k and N are positive integers, and i is an integer.

A value of i ranges from 0 to N-1, and a value of k ranges from 0 to K-1.

It should be noted that, when the terminal device employs codeword hopping (or codeword hopping is enabled), and the K codebooks are sorted in ascending order of the codeword lengths, the codeword length of the kth codebook is a positive integer multiple of the codeword length of the (k-1)th codebook.

It should be understood that, when $\beta$=1, that codeword hopping is performed ($\beta$ - 1 = 0) times from the ith codeword in the kth codebook among the K codebooks indicates that no hopping is performed from the ith codeword in the kth codebook among the K codebooks. For example, when $\beta$=1, a codeword length $L_k$ of the kth codebook is equal to 12, and a codeword length $L_{k-1}$ of the (k - 1)th codebook is equal to 4. In this case, two codewords may be obtained by performing codeword hopping $(\frac{\beta L_k}{L_{k-1}} - 1 = 2)$ times from the ith codeword in the (k-1)th codebook. A codeword obtained by sequentially concatenating the ith codeword and the two obtained codewords is the same as the ith codeword in the kth codebook.

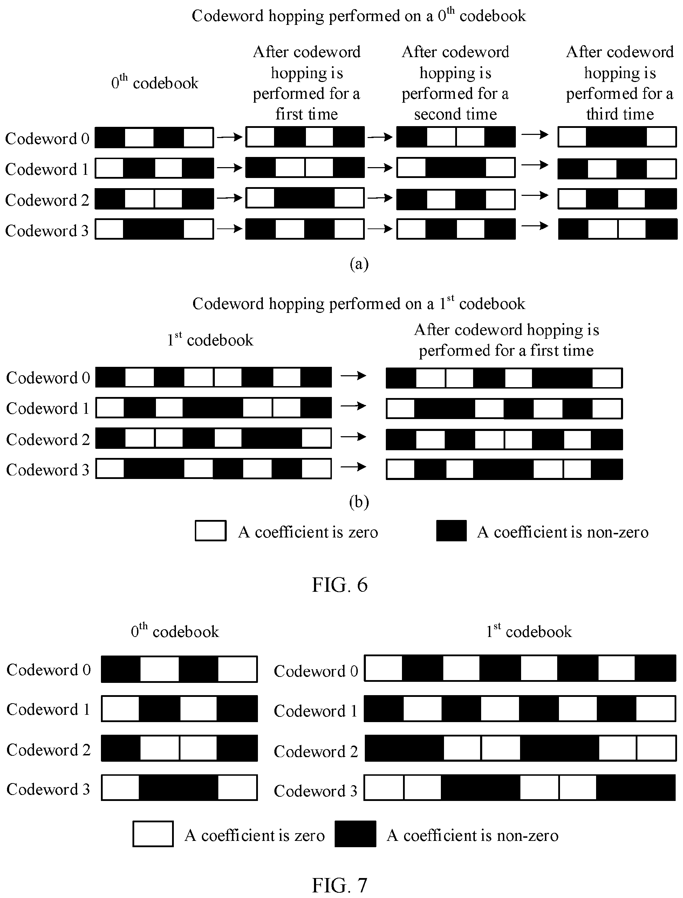

FIG. 6 is a diagram of codeword hopping according to an embodiment of this application. As shown in (a) in FIG. 6, a 0th codebook includes four codewords, and the four codewords are different from each other. From a codeword 0 in the 0th codebook, codeword hopping is performed three times to obtain a codeword 1, a codeword 2, and a codeword 3 respectively. From the codeword 1 in the 0th codebook, codeword hopping is performed three times to obtain the codeword 2, the codeword 3, and the codeword 0 respectively. From the codeword 2 in the 0th codebook, codeword hopping is performed three times to obtain the codeword 3, the codeword 0, and the codeword 1 respectively. From the codeword 3 in the 0th codebook, codeword hopping is performed three times to obtain the codeword 0, the codeword 1, and the codeword 2 respectively. The codeword 0 in the 0th codebook, and the codeword 1, the codeword 2, and the codeword 3 that are determined by performing codeword hopping three times from the codeword 0 are sequentially concatenated to obtain a new codeword whose length is 16. The same applies to the other three codewords sequentially. Consequently, four new codewords may be obtained. The obtained four new codewords may form a new codebook.

As shown in (b) in FIG. 6, a 1st codebook includes four codewords, and the four codewords are different from each other. It can be learned that the 1st codebook is obtained based on the 0th codebook. From a codeword 0 in the 1st codebook, codeword hopping is performed once to obtain a codeword 2. From a codeword 1 in the 1st codebook, codeword hopping is performed once to obtain a codeword 3. From the codeword 2 in the 1st codebook, codeword hopping is performed once to obtain the codeword 0. From the codeword 3 in the 1st codebook, codeword hopping is performed once to obtain the codeword 1. The codeword 0 in the 1st codebook and the codeword 2 that is determined by performing codeword hopping once from the codeword 0 are concatenated to obtain a new codebook whose length is 16. The same applies to the other three codewords sequentially. Consequently, four new codewords may be obtained. The obtained four new codewords may form a new codebook. It is easily learned that the new codeword determined based on (a) in FIG. 6 and the new codebook determined based on (b) in FIG. 6 are the same.

For example, when the terminal device employs codeword hopping, different elements of the to-be-transmitted data may be spread by using different codewords. Therefore, a codeword hopping pattern, namely, a codeword obtained by performing codeword hopping each time may be first determined, and a codeword used for each element in the to-be-transmitted data is determined based on the codeword hopping pattern. For example, the to-be-transmitted data includes four modulation symbols. When the terminal device selects the codeword 0 shown in (a) in FIG. 6, it is assumed that four codewords determined based on a codeword hopping pattern are the codeword 0, the codeword 1, the codeword 2, and the codeword 3. In this case, codewords used for a $0^{th}$ modulation symbol to a $3^{rd}$ modulation symbol among the four modulation symbols may be the codeword 0, the codeword 1, the codeword 2, and the codeword 3, respectively.

It may be understood that, in addition to the manners shown in FIG. 6, the codeword hopping manner may be another manner. The codeword hopping manner is not limited in this application.

With reference to the example shown in FIG. 6, when terminal devices employ codebook hopping, one of the two terminal devices selects the codebook 0 shown in (a) in FIG. 6 or the codeword 0 shown in (b) in FIG. 6, and the other of the two terminal devices selects the codebook 0 shown in (a) in FIG. 6 or the codeword 2 shown in (b) in FIG. 6, the following case exists: Because a codebook determined by performing hopping four times on the codebook 0 is the same as a codebook determined by performing hopping once on the codebook 1, when the two terminal devices perform NOMA transmission based on four possible selections, interference positions are the same and interference coefficients are the same, that is, interference patterns are the same. Therefore, this design can reduce the quantity of interference patterns, and reduce computational complexity of the receiver.

In another possible implementation, the plurality of sequences are obtained by performing a cyclic shift on the codeword in the first codebook.

It should be understood that the cyclic shift may be a cyclic left shift by at least one position or a cyclic right shift by at least one position. For example, coefficients of a codeword whose length is 4 in a first codebook are [1, 0, 1, 0]. In this case, coefficients obtained by performing a cyclic right shift by one position are [0,1, 0, 1], coefficients obtained by performing a cyclic right shift by two positions are [1, 0, 1, 0], and coefficients obtained by performing a cyclic right shift by three positions are [0,1, 0,1]. If a cyclic left shift by four positions or a cyclic right shift by four positions is performed on coefficients corresponding to a codeword whose codeword length is 4, the coefficients corresponding to the codeword before the cyclic shift may be obtained.

Optionally, the plurality of sequences may be completely the same, or the plurality of sequences may not be completely the same. For example, a cyclic left shift (or cyclic right shift) by m (0<m<the codeword length of the first codebook) positions may be performed on all codewords in the first codebook to obtain a second codebook, and the second codebook does not belong to the K codebooks. In this case, the plurality of sequences included in the any codeword in the remaining (K-1) codebooks may be a codeword in the second codebook. For a specific implementation, refer to related descriptions in Example 1 and Example 2. Details are not described herein again.

It should be understood that the plurality of sequences are obtained by performing a cyclic shift on the codeword in the first codebook. When the codeword includes a zero coefficient, the codeword in remaining (K-1) codebooks that is obtained by performing a cyclic shift on the codeword in the first codebook may be orthogonal to the codeword in the first codebook, resulting in no interference. As a result, a probability of resulting in interference can be reduced, the quantity of interference patterns can be reduced, and computational complexity of the receiver can be reduced.

FIG. 7 is still another diagram of codebooks according to an embodiment of this application. As shown in FIG. 7, K=2, there are two codebooks, and each codebook includes four codewords. A $0^{th}$ codebook is the first codebook, and a codeword length is 4. A $1^{st}$ codebook is the remaining (K-1) codebook, and a codebook length is 8.

As shown in FIG. 7, coefficients of a codeword 0 to a codeword 3 in the $0^{th}$ codebook are

$$l_0^0 = [1, 0, 1, 0], \quad l_0^1 = [0, 1, 0, 1], \quad l_0^2 = [1, 0, 0, 1]$$ , and $l_0^3 = [0, 1, 1, 0]$ , and coefficients of a codeword 0 to a codeword 3 in the $1^{st}$ codebook are $l_1^0 = [0, 1, 0, 1, 0, 1, 0, 1]$ , $l_1^1 = $ [1,0,1,0,1, 0,1,0],

$l_1^2 = [1, 1, 0, 0, 1, 1, 0, 0]$ , and $l_1^3 = [0, 0, 1, 1, 0, 0, 1, 1]$ . Each codeword in the $1^{st}$ codebook includes two same sequences, and is a codeword obtained by performing a cyclic right shift by one position on a codeword in the $0^{th}$ codebook. For example, the codeword 0 in the $1^{st}$ codebook is obtained by repeating twice a codeword obtained by performing a cyclic right shift by one position on the codeword 0 in the $0^{th}$ codebook, the codeword 1 in the $1^{st}$ codebook is obtained by repeating twice a codeword obtained by performing a cyclic right shift by one position on the codeword 1 in the $0^{th}$ codebook, the codeword 2 in the $1^{st}$ codebook is obtained by repeating twice a codeword obtained by performing a cyclic right shift by one position on the codeword 2 in the $0^{th}$ codebook, and the codeword 3 in the $1^{st}$ codebook is obtained by repeating twice a codeword obtained by performing a cyclic right shift by one position on the codeword 3 in the $0^{th}$ codebook.

It should be understood that the non-zero coefficients (for example, 1) of the codewords shown in FIG. 7 are merely an example, and do not constitute a limitation on the non-zero coefficients. In addition, the values of the non-zero coefficients of the codewords shown in FIG. 7 may be the same or different. This is not limited in this application.

It should be further understood that a quantity of zero coefficients of each codeword shown in FIG. 7 is merely an example, and does not constitute a limitation on the quantity of zero coefficients.

With reference to the example shown in FIG. 7, when two terminal devices select the codeword 0 in the $0^{th}$ codebook and the codeword 0 in the $1^{st}$ codebook respectively, or select the codeword 1 in the $0^{th}$ codebook and the codeword 1 in the $1^{st}$ codebook respectively, the following case exists: There is no interference when the two terminals perform NOMA transmission. Therefore, this design can reduce a probability of resulting in interference, reduce the quantity of interference patterns, and reduce computational complexity of the receiver.

In another possible implementation, the remaining (K-1) codebooks are obtained by spreading the first codebook by using orthogonal spreading sequences of different lengths.

It should be understood that a length of the orthogonal spreading sequence is the same as a quantity of sequences included in the codeword in the (K-1) codebooks. For example, one codeword in the (K-1) codebooks includes p (1<p) sequences, a codebook that the codeword is in is obtained by spreading the first codebook by using an orthogonal spreading sequence whose length is p, and a codeword length of the codebook is p times the codeword length of the first codebook.

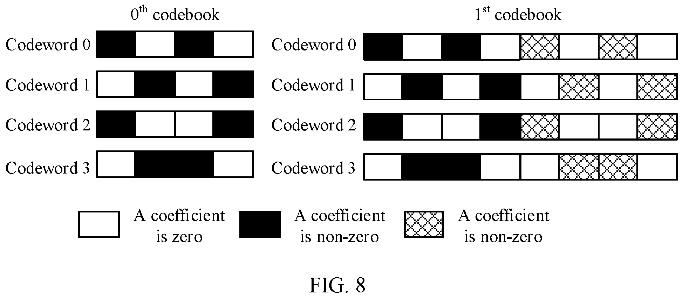

FIG. 8 is yet another diagram of codebooks according to an embodiment of this application. As shown in FIG. 8, K=2, there are two codebooks, and each codebook includes four codewords. A $0^{th}$ codebook is the first codebook, and a codeword length is 4. A $1^{st}$ codebook is the remaining (K-1) codebook, and a codeword length is 8.

As shown in FIG. 8, coefficients of a codeword 0 to a codeword 3 in the $0^{th}$ codebook are $l_0^0 = [1, 0, 1, 0]$, $l_0^1 = [0, 1, 0, 1]$, $l_0^2 = [1, 0, 0, 1]$, and $l_0^3 = [0, 1, 1, 0]$, and coefficients of a codeword 0 to a codeword 3 in the $1^{st}$ codebook are $l_1^0 = [1, 0, 1, 0, -1, 0, -1, 0]$, $l_1^1 = [0, 1, 0, 1, 0, -1, 0, -1]$, $l_1^2 = [1, 0, 0, 1, -1, 0, 0, -1]$, and $l_1^3 = [0, 1, 1, 0, 0, -1, -1, 0]$. Each codeword in the $1^{st}$ codebook includes two sequences (a $0^{th}$ sequence and a $1^{st}$ sequence from left to right. A length of each sequence is 4). The two sequences are obtained by spreading a codeword in the $0^{th}$ codebook by using an orthogonal spreading sequence [1, -1] whose length is 2. For example, a $0^{th}$ sequence in the codeword 0 in the $1^{st}$ codebook is obtained by multiplying the codeword 0 in the $0^{th}$ codebook by a $0^{th}$ value, namely, 1, in the orthogonal spreading sequence [1, -1], and a $1^{st}$ sequence in the codeword 0 in the $1^{st}$ codebook is obtained by multiplying the codeword 0 in the $0^{th}$ codebook by a $1^{st}$ value, namely, -1, in the orthogonal spreading sequence [1, -1]. A $0^{th}$ sequence in the codeword 1 in the $1^{st}$ codebook is obtained by multiplying the codeword 1 in the $0^{th}$ codebook by the $0^{th}$ value, namely, 1, in the orthogonal spreading sequence [1, -1], and a $1^{st}$ sequence in the codeword 0 in the $1^{st}$ codebook is obtained by multiplying the codeword 1 in the $0^{th}$ codebook by the $1^{st}$ value, namely, -1, in the orthogonal spreading sequence [1, -1]. A $0^{th}$ sequence in the codeword 2 in the $1^{st}$ codebook is obtained by multiplying the codeword 2 in the $0^{th}$ codebook by the $0^{th}$ value, namely, 1, in the orthogonal spreading sequence [1, -1], and a $1^{st}$ sequence in the codeword 2 in the $1^{st}$ codebook is obtained by multiplying the codeword 2 in the $0^{th}$ codebook by the $1^{st}$ value, namely, -1, in the orthogonal spreading sequence [1, -1]. A $0^{th}$ sequence in the codeword 3 in the $1^{st}$ codebook is obtained by multiplying the codeword 3 in the $0^{th}$ codebook by the $0^{th}$ value, namely, 1, in the orthogonal spreading sequence [1, -1], and a $1^{st}$ sequence in the codeword 3 in the $1^{st}$ codebook is obtained by multiplying the codeword 3 in the $0^{th}$ codebook by the $1^{st}$ value, namely, -1, in the orthogonal spreading sequence [1, -1].

It should be understood that the non-zero coefficients (for example, 1 and -1) of the codewords shown in FIG. 8 are merely an example, and do not constitute a limitation on the non-zero coefficients. In addition, the values of the non-zero coefficients of the codewords shown in FIG. 8 may be the same or different. This is not limited in this application.

It should be further understood that a quantity of zero coefficients of each codeword shown in FIG. 8 is merely an example, and does not constitute a limitation on the quantity of zero coefficients.

With reference to the example shown in FIG. 8, when terminal devices do not employ codebook hopping, one of two terminal devices selects the codeword 0 in the codebook 0 or the codeword 0 in the codebook 1, and the other of the two terminal devices selects the codeword 2 in the codebook 0 or the codeword 2 in the codebook 1, the following case exists: When the two terminal devices perform NOMA transmission by using four possible combinations of the foregoing codewords, interference positions are the same. This can reduce computational complexity of the receiver.

In addition, in this embodiment of this application, the plurality of sequences are obtained by spreading the codeword in the first codebook by using a plurality of orthogonal spreading sequences that are orthogonal to each other, to determine the remaining (K-1) codebooks. This increases a quantity of codewords in the remaining (K-1) codebooks.

As an optional embodiment, each codeword in the K codebooks corresponds to one reference signal sequence, and different codewords in the K codebooks correspond to different reference signal sequences.

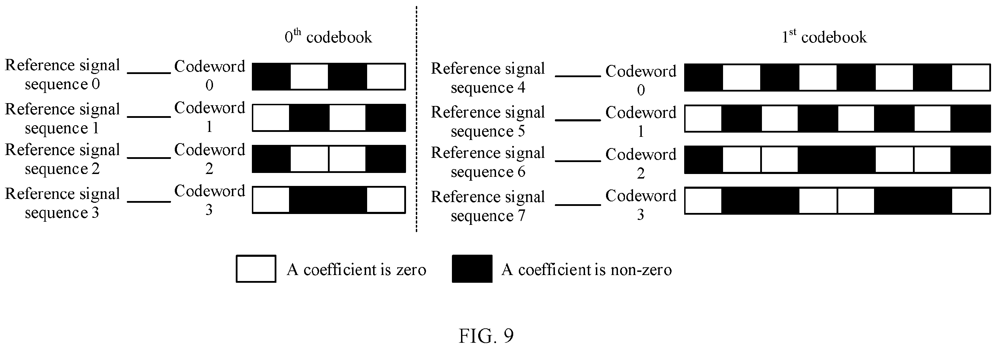

A correspondence between the reference signal sequences and the codewords is described in detail with reference to FIG. 9 by using K=2 as an example.

FIG. 9 shows a correspondence between codewords and reference signal sequences according to an embodiment of this application. As shown in FIG. 9, there are two codebooks, and each codebook includes four codewords. A $0^{th}$ codebook is the first codebook, and a codeword length is 4. A $1^{st}$ codebook is the remaining (K-1) codebook, and a codeword length is 8. There are a total of eight codewords in the two codebooks. Each codeword corresponds to one reference signal sequence, and all the codewords correspond to different reference signal sequences. For example, a codeword 0 in the $0^{th}$ codebook corresponds to a reference signal sequence 0, and a codeword 0 in a $1^{st}$ codebook corresponds to a reference signal sequence 4.

Based on the foregoing technical solution, each codeword in the K codebooks corresponds to one reference signal sequence. When a plurality of terminal devices select a codeword for transmission, the network device only needs to detect a reference signal sequence to determine the codeword selected by the terminal devices, so that data can be despread based on the determined codeword of the terminals. As a result, codeword detection performance can be improved, and overheads of detecting codewords by the network device can be reduced.

As an optional embodiment, there is at least one codeword, in the remaining (K-1) codebooks, whose corresponding reference signal sequence is the same as a reference signal sequence corresponding to a first codeword, and the first codeword is any codeword in the first codebook. In other words, one reference signal sequence may correspond to a plurality of codewords, the plurality of codewords belong to a plurality of different codebooks respectively, and a codeword within each codebook corresponds to a different reference signal sequence.

It should be understood that, when the at least one codeword is a plurality of codewords, the plurality of codewords belong to different codebooks respectively. For example, there are M (M>1, and M is an integer) codewords, in the remaining (K-1) codebooks, whose corresponding reference signal sequences are the same as the reference signal sequence corresponding to the first codeword, and the M codewords belong to M codebooks respectively.

In this embodiment of this application, one reference signal sequence may correspond to a plurality of codewords, so that reference signal overheads can be greatly reduced. In addition, when the terminal device does not employ codeword hopping, and sequences included in a codeword, belonging to the remaining (K-1) codebooks, among the plurality of codewords corresponding to one reference signal sequence are the same as a codeword of the shortest codeword length. As a result, when a plurality of terminal devices randomly select, from the K codewords, one codeword for NOMA transmission, interference positions are the same and interference coefficients are the same, so that overheads of detecting the plurality of codewords by the network device can be reduced.

For example, the first codebook includes N codewords, each codeword corresponds to one reference signal sequence, and different codewords correspond to different reference signal sequences. There is at least one codebook, including N codewords, among the remaining (K-1) codebooks. The N codewords correspond to N different reference signal sequences. In other words, each codeword corresponds to one reference signal sequence, and different codewords correspond to different reference signal sequences. N reference signal sequences corresponding to the codebook, including N codewords, among the remaining (K-1) codebooks are the same as N reference signal sequences corresponding to the first codebook.

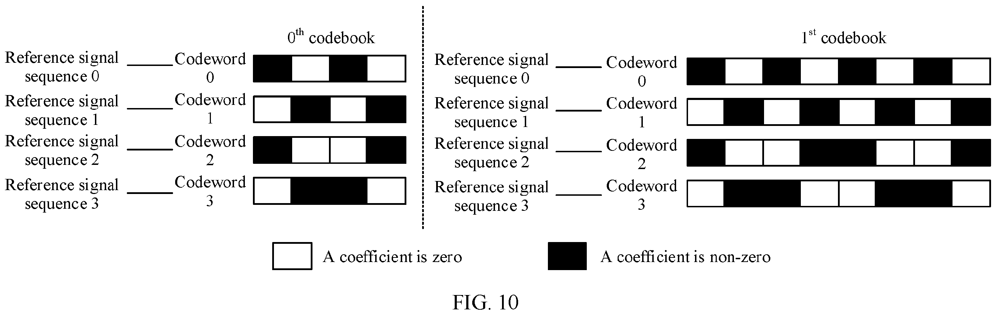

A correspondence between the reference signal sequences and the codewords is described in detail with reference to FIG. 10 by using K=2 as an example.

FIG. 10 shows another correspondence between codewords and reference signal sequences according to an embodiment of this application. As shown in FIG. 10, there are two codebooks, and each codebook includes four codewords. A $0^{th}$ codebook is the first codebook, and a codeword length is 4. A $1^{st}$ codebook is the remaining (K-1) codebook, and a codeword length is 8. Reference signal sequences corresponding to four codewords in the $0^{th}$ codebook are a reference signal sequence 0, a reference signal sequence 1, a reference signal sequence 2, and a reference signal sequence 3. Reference signal sequences corresponding to four codewords in the $1^{st}$ codebook are the reference signal sequence 0, the reference signal sequence 1, the reference signal sequence 2, and the reference signal sequence 3. It is easily learned that, a codeword 0 in the $0^{th}$ codebook and a codeword 0 in the $1^{st}$ codebook correspond to the reference signal sequence 0, a codeword 1 in the $0^{th}$ codebook and a codeword 1 in the $1^{st}$ codebook correspond to the reference signal sequence 1, a codeword 2 in the $0^{th}$ codebook and a codeword 2 in the $1^{st}$ codebook correspond to the reference signal sequence 2, and a codeword 3 in the $0^{th}$ codebook and a codeword 3 in the $1^{st}$ codebook correspond to the reference signal sequence 3.

It should be understood that, the values of the non-zero coefficients of the codewords shown in FIG. 10 may be the same or different. This is not limited in this application. In addition, a quantity of zero coefficients of each codeword shown in FIG. 10 is merely an example, and does not constitute a limitation on the quantity of zero coefficients.

In an optional embodiment, before the terminal device spreads the to-be-transmitted data based on the target codeword to obtain the spread data, the method 300 further includes: The terminal device determines a target reference signal sequence; and determines the target codeword based on the target reference signal sequence.

Optionally, the method 300 further includes: The terminal device sends the target reference signal sequence to the network device, and correspondingly, the network device receives the target reference sequence, and determines the target codeword based on the target reference sequence.

Each codeword in the K codebooks corresponds to one reference signal sequence. When different codewords in the K codebooks correspond to different reference signal sequences, the target reference sequence corresponds to the target codeword. When one reference signal sequence corresponds to a plurality of codewords, the target reference signal sequence corresponds to a plurality of codewords, and the target codeword is one of the plurality of codewords corresponding to the target reference sequence. In this case, that the terminal device determines the target codeword based on the target reference signal sequence may be randomly selecting one codeword from the plurality of codewords corresponding to the target reference signal sequence as the target codeword, to spread the to-be-transmitted data by using the codeword.

It should be understood that, in a scenario in which one reference signal sequence corresponds to a plurality of codewords, after receiving spread data sent by a plurality of terminal devices, the network device needs to first detect a reference signal sequence to determine a plurality of codewords corresponding to the reference signal sequence, and then may determine one codeword from the plurality of codewords through blind detection. Operations such as despreading, equalization, and decoding may be performed on the received data based on the determined codeword. It should be noted that, in a design scheme in which a codeword that belongs to the (K-1) codebooks and that is among a plurality of codewords corresponding to one reference signal sequence is a codeword belonging to the first codebook, when the network device determines one codeword from the plurality of codewords through blind detection, the following case can exist: When the terminal devices select different codewords corresponding to one reference signal sequence, interference patterns of data transmitted by the plurality of terminal devices are the same. Therefore, there is no need to design a corresponding blind detection algorithm based on a new interference pattern, so that complexity of blind detection can be reduced, and complexity of the receiver can be reduced.

As an optional embodiment, the method 300 further includes: receiving indication information, where the indication information indicates a manner of obtaining the plurality of sequences based on the codeword in the first codebook.

For example, when determining the remaining (K-1) codebooks based on the predefined first codebook or based on the first codebook configured by the network device, the terminal device may determine, based on the indication information sent by the network device, a manner of obtaining the (K-1) codebooks, namely, the manner of obtaining the plurality of sequences. For example, the manner may be a cyclic shift manner, a manner of spreading by using an orthogonal spreading sequence, or another mapping manner. This is not limited in this application.

As an optional embodiment, each of the remaining (K-1) codebooks belongs to one codebook set, and each codebook set includes at least two codebooks.

Optionally, codeword lengths of the codebooks within each codebook set are the same, and a quantity of the codebooks included in each codebook set is the same as a quantity of sequences included in any codeword in the codebook set.

Optionally, the codebooks included in each codebook set may be obtained by spreading the first codebook by using different orthogonal spreading sequences. For a manner of spreading by using the spreading sequences, refer to the foregoing related descriptions. Details are not described herein again.

It should be understood that the orthogonal spreading sequence may be an orthogonal cover code (orthogonal cover code, OCC), or may be a row or a column of a discrete Fourier transform (discrete Fourier transform, DFT) matrix, or may be obtained in another manner. This is not limited in this application.

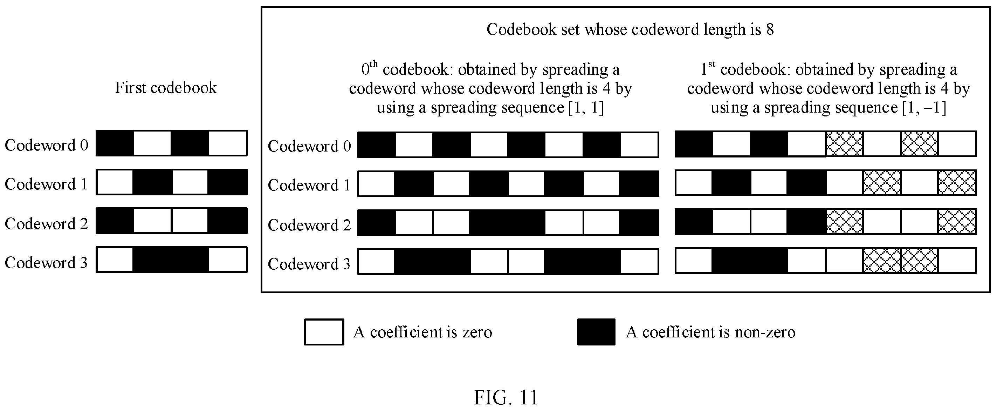

FIG. 11 is a diagram of a codebook set according to an embodiment of this application. As shown in FIG. 11, a $0^{th}$ codebook in a codebook set whose length is 8 is the remaining (K-1) codebook, and the codebook is obtained by spreading the first codebook by using a spreading sequence [1, 1]. In other words, two sequences of any codeword in the $0^{th}$ codebook in the codebook set are the same. A $1^{st}$ codebook in the codebook set whose length is 8 is obtained by spreading the first codebook by using a spreading sequence [1, -1]. In other words, values of coefficients of two sequences of any codeword in the $1^{st}$ codebook are opposite.

It should be understood that, values of non-zero coefficients of the codewords shown in FIG. 11 may be the same or different. This is not limited in this application. In addition, a quantity of zero coefficients of each codeword shown in FIG. 11 is merely an example, and does not constitute a limitation on the quantity of zero coefficients.

Optionally, any one of the remaining (K-1) codebooks may further include an additional codebook, and a codeword length of the any one codebook is the same as a codeword length of the additional codebook corresponding to the any one codebook.

Based on this solution, in a manner of adding the additional codebook to the any one of the remaining (K-1) codebooks, a quantity of codewords can be increased. In addition, the additional codebook can be designed according to a requirement of the terminal device or a requirement of an application scenario, to more flexibly adapt to different terminals or different application scenarios.

It should be understood that, when a quantity of codewords included in each of the (K-1) codebooks is greater than a quantity of codewords included in the first codebook, a codeword determined based on the first codebook may be referred to as a first partial codebook, and another codeword other than the first partial codebook may be referred to as an additional codebook. The additional codebook may be a sparse code multiple access (sparse code multiple access, SCMA) codebook or another codebook. This is not limited in this application.

It should be further understood that quantities of codewords included in additional codebooks corresponding to different codebooks in the (K-1) codebooks may be the same or different.

In this embodiment of this application, an additional codebook is added to each of the (K-1) codebooks, so that a quantity of codewords included in the codebook can be increased. In addition, for codebooks whose codeword lengths are different, codewords of the codeword lengths can be more flexibly designed.

FIG. 12 is a schematic flowchart of another communication method 1200 according to an embodiment of this application. As shown in FIG. 12, the method 1200 may include the following steps.

S1201: A terminal device spreads to-be-transmitted data based on a target codeword to obtain spread data. The target codeword is determined from K codebooks, each of the K codebooks includes at least one codeword, codeword lengths of all the K codebooks are the same, and K is an integer greater than 1.

S1202: The terminal device sends the spread data to a network device, and correspondingly, the network device receives the spread data.

S1203: The network device despreads the spread data based on the target codeword.

Optionally, coefficients of any codeword in the K codebooks include at least one zero, each codeword in a same codebook among the K codebooks includes a same quantity of zero values, and codewords in different codebooks among the K codebooks include different quantities of zero values.

In this embodiment of this application, the codewords in the different codebooks among the K codebooks include the different quantities of zero values, and correspondingly, spread data generated based on the codewords in the different codebooks have different peak-to-average power ratios (peak-to-average power ratios, PAPRs). As a result, the terminal device can use different codebooks to adapt to different peak-to-average power ratio requirements.

Optionally, the coefficients of the any codeword in the K codebooks include the at least one zero, a position of a non-zero value of a codeword in a $(k-1)^{th}$ codebook among the K codebooks is a subset of a position of a non-zero value of a codeword in a $k^{th}$ codebook, and a coefficient with the non-zero value of the codeword in the $(k-1)^{th}$ codebook is the same as a coefficient that is of the codeword in the $k^{th}$ codebook and that is determined based on the position of the non-zero value of the codeword in the $(k-1)^{th}$ codebook, where $1 \leq k < K$.

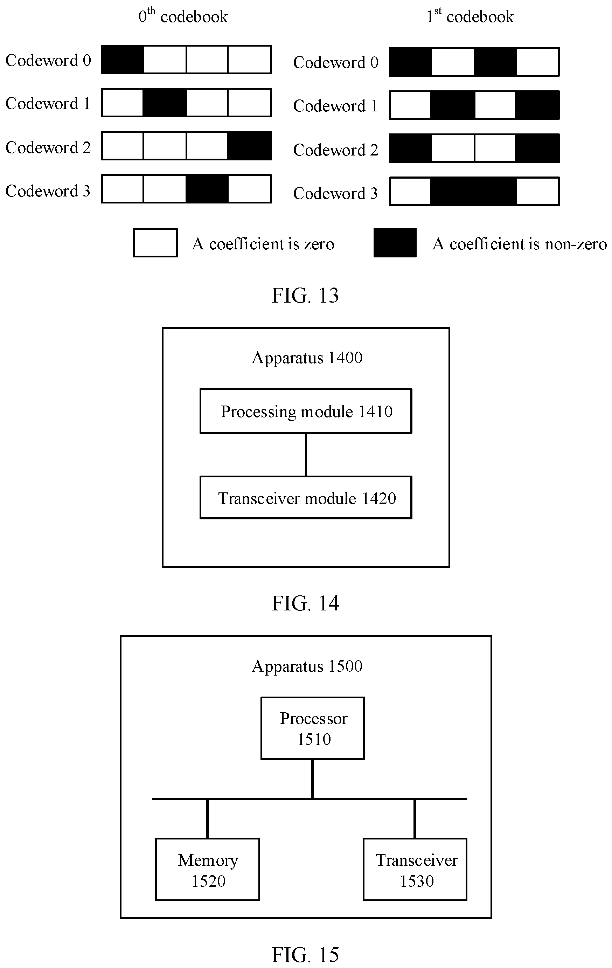

FIG. 13 is still yet another diagram of codebooks according to an embodiment of this application. As shown in FIG. 13, there are two codebooks, each codebook includes four codewords, and codeword lengths of the two codebooks are the same. A $0^{th}$ codebook may be the $(k-1)^{th}$ codebook, and a $1^{st}$ codebook may be the $k^{th}$ codebook.

As shown in FIG. 13, coefficients of a codeword 0 to a codeword 3 in the $0^{th}$ codebook are

$$l_0^0 = [1,0,0,0], \ l_0^1 = [0,1,0,0], \ l_0^2 = [0,0,0,1]$$
, and $l_0^3 = [0,0,1,0]$, and coefficients of a codeword 0 to a codeword 3 in the $1^{st}$ codebook are $l_1^0 = [1,0,1,0], \ l_1^1 = [0,1,0,1], \ l_1^2 = $ [1, 0, 0,1], and

$l_1^3 = [0,1,1,0]$. Coefficients of the codeword 0 in the $0^{th}$ codebook include three zeros, and a position of a non-zero value of the codeword 0 in the $0^{th}$ codebook may be represented as a set {0}. Coefficients of the codeword 0 in the $1^{st}$ codebook include two zeros, and positions of non-zero values of the codeword 0 in the $1^{st}$ codebook may be represented as a set {0, 2}. It can be learned that the position of the non-zero value of the codeword 0 in the $0^{th}$ codebook is a subset of the positions of the non-zero values of the codeword 0 in the $1^{st}$ codebook, and a coefficient that is of the codeword 0 in the $1^{st}$ codebook and that is determined based on the position {0} of the non-zero value of the codeword 0 in the $0^{th}$ codebook is 1, which is the same as a coefficient with the non-zero value of the codeword 0 in the $0^{th}$ codebook. It should be understood that the same may apply to other codewords of the $0^{th}$ codebook and the $1^{st}$ codebook.

Optionally, a codeword in the K codebooks corresponds to a reference signal sequence, and different codewords in the K codebooks correspond to different reference signal sequences. Alternatively, K codewords correspond to one reference signal sequence, the K codewords belong to K codebooks respectively, and a codeword within each codebook corresponds to a different reference signal sequence.

It should be understood that sequence numbers of the foregoing processes do not mean execution sequences. The execution sequence of the processes should be determined based on functions and internal logic of the processes, and should not be construed as any limitation on implementation processes of embodiments of this application.

The foregoing describes in detail the method in embodiments of this application with reference to FIG. 3 to FIG. 13. The following describes in detail the apparatus in embodiments of this application with reference to FIG. 14 and FIG. 15.

FIG. 14 is a block diagram of a communication apparatus 1400 according to an embodiment of this application.

As shown in FIG. 14, the apparatus 1400 includes a processing module 1410 and a transceiver module 1420.

In a possible implementation, the apparatus 1400 is the foregoing terminal device, or a chip or a chip system of the terminal device.

The processing module 1410 is configured to spread to-be-transmitted data based on a target codeword to obtain spread data, where the target codeword is determined from K codebooks, each of the K codebooks includes at least one codeword, a codeword length is the same within each codebook, codeword lengths of any two of the K codebooks are different, a codeword length of any one of remaining (K-1) codebooks other than a first codebook among the K codebooks is a positive integer multiple of a codeword length of the first codebook, the first codebook is a codebook whose codeword length is the shortest among the K codebooks, and K is an integer greater than 1. The transceiver module 1420 is configured to send the spread data.

Optionally, the any codeword in the remaining (K-1) codebooks includes a plurality of sequences, and the plurality of sequences are obtained based on a codeword in the first codebook.

Optionally, the plurality of sequences are the codeword in the first codebook.

Optionally, all the plurality of sequences are the same.

Optionally, the plurality of sequences include at least two different sequences.

Optionally, each of the K codebooks includes N codewords, a codeword obtained by sequentially concatenating $\frac{\beta L_k}{L_{k-1}}$ codewords obtained by performing codeword hopping $(\frac{\beta L_k}{L_{k-1}} - 1)$ times from an $i^{th}$ codeword in a $(k-1)^{th}$ codebook among the K codebooks is the same as a codeword obtained by sequentially concatenating $\beta$ codewords obtained by performing codeword hopping ($\beta$ - 1) times from an $i^{th}$ codeword in a $k^{th}$ codebook among the K codebooks, and the $i^{th}$ codeword is any codeword in the codebook that the $i^{th}$ codeword is in.

$\beta$ is a positive integer, $L_k$ represents a codeword length of the $k^{th}$ codebook, $L_{k-1}$ represents a codeword length of the $(k-1)^{th}$ codebook, $L_{k-1} < L_k$, $L_k/L_{k-1}$ is a positive integer, $1 \leq k \leq K-1$, $0 \leq i < N$, k and N are positive integers, and i is an integer.

Optionally, each codeword in the K codebooks corresponds to one reference signal sequence, and different codewords in the K codebooks correspond to different reference signal sequences.

Optionally, there is at least one codeword, in the remaining (K-1) codebooks, whose corresponding reference signal sequence is the same as a reference signal sequence corresponding to a first codeword, and the first codeword is a codeword in the first codebook.

Optionally, the processing module 1410 is further configured to: determine a target reference signal sequence; and determine the target codeword based on the target reference signal sequence.

Optionally, the remaining (K-1) codebooks are obtained by spreading the first codebook by using different orthogonal spreading sequences.

Optionally, the transceiver module 1420 is further configured to receive indication information, where the indication information indicates a manner of obtaining the plurality of sequences based on the codeword in the first codebook.

In an optional example, a person skilled in the art may understand that, the apparatus 1400 may be specifically the terminal device in the foregoing embodiments, and the apparatus 1400 may be configured to perform procedures and/or steps corresponding to the terminal device in the foregoing method embodiments. To avoid repetition, details are not described herein again.

In another possible implementation, the apparatus 1400 is the foregoing network device, or a chip or a chip system of the network device.

The transceiver module 1420 is configured to receive spread data, where the spread data is data obtained by a terminal device spreading to-be-transmitted data based on a target codeword, the target codeword is determined from K codebooks, each of the K codebooks includes at least one codeword, a codeword length is the same within each codebook, codeword lengths of any two of the K codebooks are different, a codeword length of any one of remaining (K-1) codebooks other than a first codebook among the K codebooks is a positive integer multiple of a codeword length of the first codebook, the first codebook is a codebook whose codeword length is the shortest among the K codebooks, and K is an integer greater than 1. The processing module 1410 is configured to despread the spread data based on the target codeword.

Optionally, the any codeword in the remaining (K-1) codebooks includes a plurality of sequences, and the plurality of sequences are obtained based on a codeword in the first codebook.

Optionally, the plurality of sequences are the codeword in the first codebook.

Optionally, all the plurality of sequences are the same.

Optionally, the plurality of sequences include at least two different sequences.

Optionally, each of the K codebooks includes N codewords, a codeword obtained by sequentially concatenating $\frac{\beta L_k}{L_{k-1}}$ codewords obtained by performing codeword hopping $(\frac{\beta L_k}{L_{k-1}} - 1)$ times from an $i^{th}$ codeword in a $(k-1)^{th}$

codebook among the K codebooks is the same as a codeword obtained by sequentially concatenating $\beta$ codewords obtained by performing codeword hopping ($\beta$ - 1) times from an $i^{th}$ codeword in a $k^{th}$ codebook among the K codebooks, and the $i^{th}$ codeword is any codeword in the codebook that the $i^{th}$ codeword is in.

$\beta$ is a positive integer, $L_k$ represents a codeword length of the $k^{th}$ codebook, $L_{k-1}$ represents a codeword length of the $(k-1)^{th}$ codebook, $L_{k-1}<L_k$, $L_k/L_{k-1}$ is a positive integer, $1\leq k\leq K-1$, $0\leq i<N$, k and N are positive integers, and i is an integer.

Optionally, each codeword in the K codebooks corresponds to one reference signal sequence, and different codewords in the K codebooks correspond to different reference signal sequences.

Optionally, there is at least one codeword, in the remaining (K-1) codebooks, whose corresponding reference signal sequence is the same as a reference signal sequence corresponding to a first codeword, and the first codeword is a codeword in the first codebook.

Optionally, the processing module 1410 is further configured to: determine a target reference signal sequence; and determine the target codeword based on the target reference signal sequence.

Optionally, the remaining (K-1) codebooks are obtained by spreading the first codebook by using different orthogonal spreading sequences.

Optionally, the transceiver module 1420 is further configured to receive indication information, where the indication information indicates a manner of obtaining the plurality of sequences based on the codeword in the first codebook.

In an optional example, a person skilled in the art may understand that, the apparatus 1400 may be specifically the network device in the foregoing method embodiments, and the apparatus 1400 may be configured to perform procedures and/or steps corresponding to the network device in the foregoing method embodiments. To avoid repetition, details are not described herein again.

It should be understood that the apparatus 1400 herein is embodied in a form of functional module. The term "module" herein may be an application-specific integrated circuit (application-specific integrated circuit, ASIC), an electronic circuit, a processor (such as a shared processor, a dedicated processor, or a group processor) configured to execute one or more software or firmware programs, a memory, a combinational logic circuit, and/or another suitable component that supports the described function. In an optional example, a person skilled in the art may understand that, the apparatus 1400 may be specifically the terminal device or the network device in the foregoing embodiments or functions of the terminal device or the network device in the foregoing embodiments may be integrated into the apparatus 1400, and the apparatus 1400 may be configured to perform procedures and/or steps corresponding to the terminal device or the network device in the foregoing method embodiments. To avoid repetition, details are not described herein again.

The apparatus 1400 has a function of implementing the corresponding steps performed by the terminal device or the network device in the foregoing methods. The foregoing function may be implemented by hardware, or may be implemented by hardware executing corresponding software. The hardware or the software includes one or more modules corresponding to the function. For example, the sending module 1410 may be a communication interface such as a transceiver interface.

FIG. 15 is a block diagram of another communication apparatus 1500 according to an embodiment of this application. The apparatus 1500 includes a processor 1510, a memory 1520, and a transceiver 1530. The processor 1510, the memory 1520, and the transceiver 1530 are connected through an internal connection path. The memory 1520 is configured to store instructions. The processor 1510 is configured to execute the instructions stored in the memory 1520, to enable the apparatus 1500 to perform the communication method provided in the foregoing method embodiments.

It should be understood that functions of the apparatus 1400 in the foregoing embodiment may be integrated into the apparatus 1500. The apparatus 1500 may be configured to perform steps and/or procedures corresponding to the terminal device in the foregoing method embodiments, or the apparatus 1500 may be further configured to perform steps and/or procedures corresponding to the network device in the foregoing method embodiments.

Optionally, the memory 1520 includes a read-only memory and a random access memory, and provides instructions and data to the processor. A part of the memory may further include a non-volatile random access memory. For example, the memory may further store information about a device type. The processor 1510 may be configured to execute the instructions stored in the memory. When the processor executes the instructions, the processor 1510 can perform the steps and/or procedures corresponding to the terminal device in the foregoing method embodiments, or the processor 1510 can perform the steps and/or procedures corresponding to the network device in the foregoing method embodiments.

It should be understood that, in this embodiment of this application, the processor 1510 may be a central processing unit (central processing unit, CPU), or the processor 1510 may be another general-purpose processor, a digital signal processor (digital signal processor, DSP), an ASIC, a field programmable gate array (field programmable gate array, FPGA) or another programmable logic device, a discrete gate or a transistor logic device, a discrete hardware component, or the like. The processor 810 may be a microprocessor or the processor 1510 may be any conventional processor or the like.

During implementation, the steps in the foregoing methods can be implemented through a hardware integrated logic circuit in the processor, or through instructions in a form of software. The steps of the method disclosed with reference to embodiments of this application may be directly performed by a hardware processor, or may be performed by a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor executes the instructions in the memory and completes the steps in the foregoing methods in combination with the hardware of the processor. To avoid repetition, details are not described herein again.

This application further provides a computer-readable medium. The computer-readable medium stores a computer program. When the computer program is executed by a computer, functions of the terminal device or the network device in any one of the foregoing method embodiments are implemented.

This application further provides a computer program product. When the computer program product is executed by a computer, functions of the terminal device or the network device in any one of the foregoing method embodiments are implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by the person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of software product. The computer software product is stored in a storage medium, and includes several instructions for instructing a computer device (which may be a personal computer, a server, a network device, or the like) to perform a part or all of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by the person skilled in the art within the technical scope disclosed in this application shall fall within the protection scope of this application. Therefore, the protection scope of this application shall be subject to the protection scope of the claims.

## Claims

1. A communication method, applied to a terminal device, wherein the method comprises:

spreading to-be-transmitted data based on a target codeword to obtain spread data, wherein the target codeword is determined from K codebooks, each of the K codebooks comprises at least one codeword, a codeword length is the same within each codebook, codeword lengths of any two of the K codebooks are different, a codeword length of any one of remaining (K-1) codebooks other than a first codebook among the K codebooks is a positive integer multiple of a codeword length of the first codebook, the first codebook is a codebook whose codeword length is the shortest among the K codebooks, and K is an integer greater than 1; and
sending the spread data.

2. The method according to claim 1, wherein any codeword in the remaining (K-1) codebooks comprises a plurality of sequences, and the plurality of sequences are obtained based on a codeword in the first codebook.

3. The method according to claim 2, wherein the plurality of sequences are the codeword in the first codebook.

4. The method according to claim 2 or 3, wherein all the plurality of sequences are the same.

5. The method according to claim 2 or 3, wherein the plurality of sequences comprise at least two different sequences.

6. The method according to claim 5, wherein each of the K codebooks comprises N codewords, a codeword obtained by sequentially concatenating $\frac{\beta L_k}{L_{k-1}}$ codewords obtained by performing codeword hopping $(\frac{\beta L_k}{L_{k-1}} - 1)$ times from an $i^{th}$ codeword in a $(k-1)^{th}$ codebook among the K codebooks is the same as a codeword obtained by sequentially concatenating $\beta$ codewords obtained by performing codeword hopping ($\beta$ - 1) times from an $i^{th}$ codeword in a $k^{th}$ codebook among the K codebooks, and the $i^{th}$ codeword is any codeword in the codebook that the $i^{th}$ codeword is in, wherein
$\beta$ is a positive integer, $L_k$ represents a codeword length of the $k^{th}$ codebook, $L_{k-1}$ represents a codeword length of the ($k$ - 1)$^{th}$ codebook, $L_{k-1} < L_k$, $L_k/L_{k-1}$ is a positive integer, $1 \le k \le K-1$, $0 \le i < N$, k and N are positive integers, and i is an integer.

7. The method according to any one of claims 1 to 6, wherein each codeword in the K codebooks corresponds to one reference signal sequence, and different codewords in the K codebooks correspond to different reference signal sequences.

8. The method according to any one of claims 1 to 6, wherein there is at least one codeword, in the remaining (K-1) codebooks, whose corresponding reference signal sequence is the same as a reference signal sequence corresponding to a first codeword, and the first codeword is a codeword in the first codebook.

9. The method according to claim 7 or 8, wherein before the spreading to-be-transmitted data based on a target codeword to obtain spread data, the method further comprises:

   determining a target reference signal sequence; and
   determining the target codeword based on the target reference signal sequence.

10. The method according to claim 2, wherein the remaining (K-1) codebooks are obtained by spreading the first codebook by using different orthogonal spreading sequences.

11. The method according to claim 10, wherein the method further comprises:
    receiving indication information, wherein the indication information indicates a manner of obtaining the plurality of sequences based on the codeword in the first codebook.

12. A communication method, applied to a network device, wherein the method comprises:

    receiving spread data, wherein the spread data is data obtained by a terminal device spreading to-be-transmitted data based on a target codeword, the target codeword is determined from K codebooks, each of the K codebooks comprises at least one codeword, a codeword length is the same within each codebook, codeword lengths of any two of the K codebooks are different, a codeword length of any one of remaining (K-1) codebooks other than a first codebook among the K codebooks is a positive integer multiple of a codeword length of the first codebook, the first codebook is a codebook whose codeword length is the shortest among the K codebooks, and K is an integer greater than 1; and
    despreading the spread data based on the target codeword.

13. The method according to claim 12, wherein any codeword in the remaining (K-1) codebooks comprises a plurality of sequences, and the plurality of sequences are obtained based on a codeword in the first codebook.

14. The method according to claim 13, wherein the plurality of sequences are the codeword in the first codebook.

15. The method according to claim 13 or 14, wherein all the plurality of sequences are the same.

16. The method according to claim 13 or 14, wherein the plurality of sequences comprise at least two different sequences.

17. The method according to claim 16, wherein each of the K codebooks comprises N codewords, a codeword obtained by sequentially concatenating $\frac{\beta L_k}{L_{k-1}}$ codewords obtained by performing codeword hopping $(\frac{\beta L_k}{L_{k-1}} - 1)$ times from an $i^{th}$ codeword in a (k-1)$^{th}$ codebook among the K codebooks is the same as a codeword obtained by sequentially concatenating $\beta$ codewords obtained by performing codeword hopping ($\beta$ - 1) times from an $i^{th}$ codeword in a k$^{th}$ codebook among the K codebooks, and the i$^{th}$ codeword is all codewords in the codebook that the i$^{th}$ codeword is in, wherein

   $\beta$ is a positive integer, $L_k$ represents a codeword length of the $k^{th}$ codebook, $L_{k-1}$ represents a codeword length of the $(k - 1)^{th}$ codebook, $L_k/L_{k-1}$ is a positive integer, $1 \leq k \leq K-1$, $0 \leq i < N$, k and N are positive integers, and i is an integer.

18. The method according to any one of claims 12 to 17, wherein each codeword in the K codebooks corresponds to one reference signal sequence, and different codewords in the K codebooks correspond to different reference signal sequences.

19. The method according to any one of claims 13 to 17, wherein there is at least one codeword, in the remaining (K-1) codebooks, whose corresponding reference signal sequence is the same as a reference signal sequence corresponding to a first codeword, and the first codeword is a codeword in the first codebook.

20. The method according to claim 18 or 19, wherein before the despreading the spread data based on the target codeword, the method further comprises:

   determining a target reference signal sequence; and
   determining the target codeword based on the target reference signal sequence.

21. The method according to claim 13, wherein the remaining (K-1) codebooks are obtained by spreading the first codebook by using different orthogonal spreading sequences.

22. The method according to claim 21, wherein the method further comprises:
   receiving indication information, wherein the indication information indicates a manner of obtaining the plurality of sequences based on the codeword in the first codebook.

23. A communication apparatus, comprising a module configured to implement the method according to any one of claims 1 to 22.

24. A communication apparatus, comprising a processor and a memory, wherein the memory is configured to store a computer program, and the processor is configured to execute the computer program, to enable the communication apparatus to implement the method according to any one of claims 1 to 22.

25. A computer-readable storage medium, wherein the computer-readable storage medium stores a computer program, and when the computer program is executed by a processor, the method according to any one of claims 1 to 22 is implemented.

26. A computer program product, comprising a computer program, wherein when the computer program is run, the method according to any one of claims 1 to 22 is implemented.

27. A communication system, comprising a terminal device and a network device, wherein the terminal device is configured to implement the method according to any one of claims 1 to 11, and the network device is configured to implement the method according to any one of claims 12 to 22.

FIG. 1

First set of GF resources                                    Second set of GF resources

Reference signal ⟷ Codeword          Reference signal ⟷ Codeword
sequence 0             0                      sequence 4             0

Reference signal ⟷ Codeword          Reference signal ⟷ Codeword
sequence 1             1                      sequence 5             1

Reference signal ⟷ Codeword          Reference signal ⟷ Codeword
sequence 2             2                      sequence 6             2

Reference signal ⟷ Codeword          Reference signal ⟷ Codeword
sequence 3             3                      sequence 7             3

☐ A coefficient is zero     ■ A coefficient is non-zero

FIG. 2

300

```
┌──────────────────┐                          ┌──────────────────┐
│  Network device  │                          │  Terminal device │
└──────────────────┘                          └──────────────────┘
         │                                              │
         │         ┌────────────────────────────────────────────┐
         │         │ S301: Spread to-be-transmitted data based   │
         │         │ on a target codeword to obtain spread data, │
         │         │ where the target codeword is determined     │
         │         │ from K codebooks ...                        │
```

S301: Spread to-be-transmitted data based on a target codeword to obtain spread data, where the target codeword is determined from K codebooks, each of the K codebooks includes at least one codeword, a codeword length is the same within each codebook, codeword lengths of any two of the K codebooks are different, a codeword length of any one of remaining (K–1) codebooks other than a first codebook among the K codebooks is a positive integer multiple of a codeword length of the first codebook, the first codebook is a codebook whose codeword length is the shortest among the K codebooks, and K is an integer greater than 1

S302: Spread data

S303: Despread the spread data based on the target codeword

FIG. 3

$0^{th}$ codebook

$1^{st}$ codebook

Codeword 0

Codeword 1

Codeword 2

Codeword 3

Codeword 0

Codeword 1

Codeword 2

Codeword 3

☐ A coefficient is zero  ■ A coefficient is non-zero

FIG. 4

$0^{th}$ codebook

$1^{st}$ codebook

Codeword 0

Codeword 1

Codeword 2

Codeword 3

Codeword 0

Codeword 1

Codeword 2

Codeword 3

☐ A coefficient is zero  ■ A coefficient is non-zero

FIG. 5

Codeword hopping performed on a $0^{th}$ codebook

|  | $0^{th}$ codebook | After codeword hopping is performed for a first time | After codeword hopping is performed for a second time | After codeword hopping is performed for a third time |
|---|---|---|---|---|
| Codeword 0 | ■□■□ → | □■□■ → | ■□□■ → | □■■□ |
| Codeword 1 | □■□■ → | ■□□■ → | □■■□ → | ■□■□ |
| Codeword 2 | ■□□■ → | □■■□ → | ■□■□ → | □■□■ |
| Codeword 3 | □■■□ → | ■□■□ → | □■□■ → | ■□□■ |

(a)

Codeword hopping performed on a $1^{st}$ codebook

|  | $1^{st}$ codebook | After codeword hopping is performed for a first time |
|---|---|---|
| Codeword 0 | ■□■□□■□■ → | ■□□■□■□■ |
| Codeword 1 | □■□■□■□■ → | □■□■□■□■ |
| Codeword 2 | ■□□■□■□■ → | ■□■□□■■□ |
| Codeword 3 | □■□■□■□■ → | □■□■□■□■ |

(b)

□ A coefficient is zero     ■ A coefficient is non-zero

FIG. 6

| | $0^{th}$ codebook | | $1^{st}$ codebook |
|---|---|---|---|
| Codeword 0 | ■□■□ | Codeword 0 | □■□■□■□■ |
| Codeword 1 | □■□■ | Codeword 1 | ■□■□■□■□ |
| Codeword 2 | ■□□■ | Codeword 2 | ■□□■□■□□ |
| Codeword 3 | □■■□ | Codeword 3 | □□■□□■■□ |

□ A coefficient is zero     ■ A coefficient is non-zero

FIG. 7

FIG. 8

0th codebook

Reference signal _____ Codeword
sequence 0                    0

Reference signal _____ Codeword
sequence 1                    1

Reference signal _____ Codeword
sequence 2                    2

Reference signal _____ Codeword
sequence 3                    3

1st codebook

Reference signal _____ Codeword
sequence 4                    0

Reference signal _____ Codeword
sequence 5                    1

Reference signal _____ Codeword
sequence 6                    2

Reference signal _____ Codeword
sequence 7                    3

☐ A coefficient is zero      ■ A coefficient is non-zero

FIG. 9

0<sup>th</sup> codebook

Reference signal _____ Codeword
sequence 0                    0

Reference signal _____ Codeword
sequence 1                    1

Reference signal _____ Codeword
sequence 2                    2

Reference signal _____ Codeword
sequence 3                    3

1<sup>st</sup> codebook

Reference signal _____ Codeword
sequence 0                    0

Reference signal _____ Codeword
sequence 1                    1

Reference signal _____ Codeword
sequence 2                    2

Reference signal _____ Codeword
sequence 3                    3

☐ A coefficient is zero          ■ A coefficient is non-zero

FIG. 10

Codebook set whose codeword length is 8

First codebook

0<sup>th</sup> codebook: obtained by spreading a codeword whose codeword length is 4 by using a spreading sequence [1, 1]

1<sup>st</sup> codebook: obtained by spreading a codeword whose codeword length is 4 by using a spreading sequence [1, −1]

Codeword 0

Codeword 1

Codeword 2

Codeword 3

Codeword 0

Codeword 1

Codeword 2

Codeword 3

A coefficient is zero          A coefficient is non-zero

FIG. 11

1200

```
┌──────────────────┐                              ┌──────────────────┐
│  Network device  │                              │  Terminal device │
└──────────────────┘                              └──────────────────┘
```

S1201: Spread to-be-transmitted data based on a target
codeword to obtain spread data, where the target
codeword is determined from K codebooks, each of the K
codebooks includes at least one codeword, codeword
lengths of all the K codebooks are the same, and K is an
integer greater than 1

S1202: Spread data

S1203: Despread the spread data
based on the target codeword

FIG. 12

0<sup>th</sup> codebook                1<sup>st</sup> codebook

Codeword 0

Codeword 1

Codeword 2

Codeword 3

☐ A coefficient is zero      ■ A coefficient is non-zero

**FIG. 13**

Apparatus 1400

Processing module 1410

Transceiver module 1420

**FIG. 14**

Apparatus 1500

Processor 1510

Memory 1520

Transceiver 1530

**FIG. 15**

## INTERNATIONAL SEARCH REPORT

| International application No. |
|---|
| **PCT/CN2022/117947** |

| A. | CLASSIFICATION OF SUBJECT MATTER |
|---|---|

H04L 27/26(2006.01)i

According to International Patent Classification (IPC) or to both national classification and IPC

| B. | FIELDS SEARCHED |
|---|---|

Minimum documentation searched (classification system followed by classification symbols)

H04L; H04B

Documentation searched other than minimum documentation to the extent that such documents are included in the fields searched

Electronic data base consulted during the international search (name of data base and, where practicable, search terms used)

VEN; WPABS; CNTXT; USTXT; EPTXT; CNABS; 3GPP: 码字, 多码本, 码本集, 码本簇, 长度, 相同, 一样, 不同, 终端, 扩展, 扩充, codeword, multiple codebook, codebook set, codebook cluster, length, same, different, terminal, extended

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 107113103 A (HUAWEI TECHNOLOGIES CO., LTD.) 29 August 2017 (2017-08-29) description, paragraphs 0199-0297 | 1-27 |
| Y | CN 109155772 A (IDAC HOLDINGS, INC.) 04 January 2019 (2019-01-04) description, paragraphs 0082-0104 | 1-27 |
| A | CN 106712892 A (POTEVIO INFORMATION TECHNOLOGY CO., LTD.) 24 May 2017 (2017-05-24) entire document | 1-27 |
| A | CN 109756307 A (HUAWEI TECHNOLOGIES CO., LTD.) 14 May 2019 (2019-05-14) entire document | 1-27 |
| A | JP 2017153084 A (FUJITSU LTD.) 31 August 2017 (2017-08-31) entire document | 1-27 |
| A | CN 101166052 A (NTT DOCOMO, INC.) 23 April 2008 (2008-04-23) entire document | 1-27 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 January 2023** | **20 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

# EP 4 576 694 A1

## INTERNATIONAL SEARCH REPORT
### Information on patent family members

International application No.

**PCT/CN2022/117947**

| Patent document cited in search report | | | Publication date (day/month/year) | Patent family member(s) | | | Publication date (day/month/year) |
|---|---|---|---|---|---|---|---|
| CN | 107113103 | A | 29 August 2017 | EP | 3226453 | A1 | 04 October 2017 |
| | | | | KR | 20170108008 | A | 26 September 2017 |
| | | | | RU | 2017126056 | A3 | 24 January 2019 |
| | | | | JP | 2018509017 | A | 29 March 2018 |
| | | | | WO | 2016101461 | A1 | 30 June 2016 |
| | | | | US | 2017289979 | A1 | 05 October 2017 |
| | | | | BR | 112017013571 | A2 | 06 March 2018 |
| CN | 109155772 | A | 04 January 2019 | WO | 2017196703 | A1 | 16 November 2017 |
| | | | | US | 2019222371 | A1 | 18 July 2019 |
| | | | | TW | 201740712 | A | 16 November 2017 |
| CN | 106712892 | A | 24 May 2017 | None | | | |
| CN | 109756307 | A | 14 May 2019 | WO | 2019085690 | A1 | 09 May 2019 |
| | | | | US | 2020244291 | A1 | 30 July 2020 |
| | | | | EP | 3683990 | A1 | 22 July 2020 |
| JP | 2017153084 | A | 31 August 2017 | None | | | |
| CN | 101166052 | A | 23 April 2008 | US | 2008095258 | A1 | 24 April 2008 |
| | | | | EP | 1914947 | A1 | 23 April 2008 |
| | | | | JP | 2008104193 | A | 01 May 2008 |

Form PCT/ISA/210 (patent family annex) (January 2015)